(19) Europäisches Patentamt
European Patent Office
Office européen des brevets

(11) **EP 3 796 683 B1**

(12) **EUROPEAN PATENT SPECIFICATION**

(45) Date of publication and mention of the grant of the patent:
**26.10.2022 Bulletin 2022/43**

(21) Application number: **19198675.1**

(22) Date of filing: **20.09.2019**

(51) International Patent Classification (IPC):
*H04W 4/029* (2018.01)   *G08G 1/00* (2006.01)
*G08G 1/01* (2006.01)   *G06Q 30/02* (2012.01)
*G06N 3/08* (2006.01)   *G06N 3/12* (2006.01)
*H04W 4/60* (2018.01)   *G07C 5/00* (2006.01)
*G06Q 50/30* (2012.01)

(52) Cooperative Patent Classification (CPC):
**H04W 4/029; G06Q 30/01; G06Q 30/0201; G08G 1/0112; G08G 1/012; G08G 1/0129; G08G 1/20;** G06N 3/08; G06N 3/126; G06N 7/005; G06N 20/10; G06Q 50/30; G07C 5/008; H04W 4/60

(54) **METHOD, APPARATUS AND COMPUTER PROGRAM FOR ALIGNING VEHICULAR DATA OF ONE OR MORE VEHICLES WITH MOBILE DEVICE DATA OF TWO OR MORE MOBILE DEVICES**

VERFAHREN, VORRICHTUNG UND COMPUTERPROGRAMM ZUM AUSRICHTEN VON FAHRZEUGDATEN EINES ODER MEHRERER FAHRZEUGE MIT MOBILVORRICHTUNGSDATEN VON ZWEI ODER MEHR MOBILVORRICHTUNGEN

PROCÉDÉ, APPAREIL ET PROGRAMME INFORMATIQUE POUR ALIGNER LES DONNÉES DE VÉHICULE D'UN OU DE PLUSIEURS VÉHICULES AVEC LES DONNÉES DE DISPOSITIF MOBILE D'AU MOINS DEUX DISPOSITIFS MOBILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.03.2021 Bulletin 2021/12**

(73) Proprietor: **Bayerische Motoren Werke Aktiengesellschaft 80809 München (DE)**

(72) Inventors:
• **Tian, Jilei**
  **Chicago, Illinois 60605 (US)**
• **Cao, Yang**
  **Chicago, Illinois 60601 (US)**
• **Athas, Gregory**
  **Lisle, Illinois 60532 (US)**
• **Tchoi, Won**
  **Barrington, Illinois 60010 (US)**

(56) References cited:
**EP-A1- 3 451 268**      **GB-A- 2 534 273**
**US-A1- 2016 146 615**   **US-A1- 2017 094 478**

**Description**

**Field**

Examples relate to a method, an apparatus and a computer program for aligning vehicular data of one or more vehicles with mobile device data of two or more mobile devices, more specifically to a method, an apparatus and a computer program for aligning the vehicular data with the mobile device data on a per-user basis.

**Background**

The analysis and learning from data generated in the automotive sector is a field of research and development that is crucial towards the creation of smart personalized services. This data analysis may be used to provide personalized assistance functionality for different users of a vehicle. The data collection, however, is often performed on a per-vehicle or account basis. In other words, different users of the vehicle might share the same account, e.g. family members owning the car(s), and not be differentiated. To provide personalized assistance functionality for a user of the vehicle, such data may be personalized on a per-user basis, as the vehicular data of individual users might not be differentiated in cases in which a vehicle is shared with different users.

US patent application US 2016/0146615 A1 discloses systems and methods for driver and vehicle tracking. In said patent application, drivers are matched to vehicles of a fleet of vehicles based on location tracking performed both on the vehicles and on mobile devices of the drivers. In addition, a characteristic driving behavior, e.g., regarding acceleration or braking, can be taken into account to match the vehicles to the drivers.

Similarly, EP 3 451 268 A1 and GB 2534273 A relate to concepts for matching vehicles and drivers, based on location tracking of both the vehicles and the drivers.

**Summary**

There may be a desire for an improved collection of vehicular data, in which the data from vehicles and mobile devices is assigned to the right user.

This desire is addressed by the subject-matter of the independent claims.

Embodiments of the present disclosure provide a computer-implemented method for aligning vehicular data of one or more vehicles with mobile device data of two or more mobile devices. The method comprises obtaining the vehicular data of the one or more vehicles. The one or more vehicles have a vehicle identifier. The one or more vehicles are associated with a single digital account identifier. The method comprises obtaining mobile device data of two or more mobile devices being associated with the digital account identifier. The digital account identifier is associated with two or more users using the same digital account identifier. Each of the mobile devices is associated with one of the two or more users. The method comprises identifying one or more trips taken with the one or more vehicles based on the vehicular data and one or more trips taken with the two or more mobile devices based on the mobile device data. The method comprises assigning vehicular data of the one or more trips taken with the one or more vehicles to at least one of the two or more users. Vehicular data of a trip is assigned to at least one of the two or more users based on a match between the trip taken with the one or more vehicles and a mobility pattern of one of the two or more users. The method comprises assigning the mobile device data to a user of the two or more users being associated with the respective mobile device. The method comprises storing the vehicular data and the mobile device data based on the assignment of the vehicular data and of the mobile device data to at least one of the two or more users.

Embodiments may provide an alignment between vehicular data from multiple different sources and mobile device data, thereby enabling a determination about which user is associated with the vehicle data. The assignment of the vehicular data to the user is based on a match or a similarity between the vehicular data and the mobile device data. A mobile device of a user may be a personal device that is at least semi-permanently linked to a user. For example, the mobile device may be a smartphone or a wearable device. Within the vehicular data and the mobile device data, one or more trips may be identified, which may form the basis of the alignment between vehicular data and mobile device data. If, for a given trip of the user, this mobile device has performed the same trip, the user may be deemed to have taken the trip, so the vehicular data may be assigned to the user deemed to have taken the trip(unless another mobile device of the user has taken a different trip at the same time). If none of the mobile devices have taken the same trip, the method may evaluate whether the trip matches a mobility pattern of one of the users, so the vehicular data may be assigned to the user (unless a mobile device of the user has taken a different trip at the same time). This may provide the alignment between the vehicular data and the mobile device data, which enables assigning each trip to one of the users, so that it can be used to provide a more personal driving experience for the user.

In at least some embodiments, the vehicular data originates from a plurality of different vehicular data sources. The vehicular data may at least partially have been collected with incomplete identifier information. The method may comprise merging the vehicular data from the plurality of data sources based on a vehicle identifier of the respective vehicle. This may enable or facilitate a usage of vehicular data from a plurality of vehicular data sources.

In some embodiments, the vehicular data may be retroactively merged based on the vehicle identifier of the respective vehicle. This may enable a usage of past data, e.g. data that has been collected by various vehicular data sources in the past

For example, each mobility pattern may be based on a plurality of features related to the mobility pattern. The plurality of features may comprise one or more elements of the group of an average staying duration at a location per day, an average staying duration at a home location per day, an average staying duration at a work location per day, average staying duration at a location in a given hour, an average staying duration at a home location in a given hour, an average staying duration at a work location in a given hour, a frequency at which a user leaves or returns to a location in a given hour, an average vehicle travel duration during a given hour, an average staying duration in a given hour, an average number of trips per day or workday or in a given timeframe of a day or workday, an average number of trips per day or workday or in a given timeframe of a day or workday between a pre-defined starting location and a pre-defined destination, an average staying time at a starting location of a trip, and an average staying time at a destination of a trip. Using one or more of the above features, the mobility pattern of the individual users / mobile devices may be automatically determined and used for similarity matching.

In some embodiments, the match or mismatch between a trip taken with one of the one or more vehicles and a trip taken with a mobile device, or between a trip taken with one of the one or more vehicles and a mobility pattern of one of the two or more users may be computed based on at least one of a starting time, an ending time, a duration, a starting position, an ending position, and a route of the respective trips or mobility patterns. These features or aspects may be used to determine whether two trips match or mismatch.

For example, the match between the trip taken with the one or more vehicles and the mobility pattern of one of the two or more users may be computed based on a similarity between the trip taken with the one or more vehicles and the mobility pattern of one of the two or more users. In this case, not an exact match between trips may be used for the assignment, but merely a match between the trip and the mobility pattern of the respective users (i.e. based on trips has the respective user has taken in the past).

The similarity may be computed based on a similarity measure. The method may comprise improving one or more weighting factors for the similarity measure using a learning algorithm based on one or more mobility patterns of the two or more users and/or the one or more trips taken with the one or more vehicles. The one or more weighting factors may be improved in a supervised manner. The weighting factors may be improved in order to better differentiate different users in the similarity measure.

In at least some embodiments, the method comprises detecting a conflict between the one or more trips taken with the one or more vehicles, the one or more trips taken with the two or more mobile devices, and/or the mobility pattern of the two or more users, so that a new user is added to the two or more users or an association between a user and a mobile device is changed if a conflict is detected. Conflict detection may be used to find out whether an additional user is to be added to the account.

After determining a user, the user may be prompted to confirm that they are a new user using a mobile device of the two or more mobile devices. In other words, a user is associated with a mobile device based on a user-based confirmation of the association, e.g. if the user of a mobile device is changed.

For example, the vehicular data may be assigned to the at least one user using a dynamic user-centric account graph. The dynamic user-centric account graph may comprise the two or more users. Each of the two or more users may be linked with one or more mobile devices and with one or more vehicles within the dynamic user-centric account graph.

In at least some embodiments, the method may comprise determining an association between a user and a mobile device based on a similarity measure between a mobility pattern of the mobile device and a mobility pattern of the user. This may be used to determine whether a new mobile device is used by a previously known user.

The method may further comprise training a machine-learning model to create a user-specific machine-learning model using the combined vehicular and mobile device data being associated with the respective user. The user-specific machine-learning model may be used to provide a more personalized service for the user.

Embodiments of the present disclosure further provide a corresponding computer program having a program code for performing the method, when the computer program is executed on a computer, a processor, or a programmable hardware component.

Embodiments of the present disclosure further provide an apparatus for aligning vehicular data of one or more vehicles with mobile device data of two or more mobile devices. The apparatus comprises an interface, a storage module and a processing module. The processing module is configured to obtain the vehicular data of one or more vehicles via the interface. The one or more vehicles have a vehicle identifier. The one or more vehicles are associated with a single digital account identifier. The processing module is configured to obtain mobile device data of two or more mobile devices being associated with the digital account identifier via the interface. The digital account identifier is associated with two or more users using the same digital account identifier. Each of the mobile devices is associated with one of the two or more users. The processing module is configured to identify one or more trips taken with the one or more vehicles based on the vehicular data and one or more trips taken with the two or more mobile devices based on the mobile device data. The processing module is configured to assign vehicular data of the one or more trips taken with the one or more vehicles to at least one of the two or more users, wherein vehicular data of a trip is assigned to at least one of the two or more users based on a match between the trip taken with the one or more vehicles and a mobility pattern of one of the two or more users . The processing module is configured to assign the mobile device data to a user of the two or more users being associated with the respective mobile device. The processing module is configured to store the vehicular data and the mobile device data in the storage module based on the assignment of the vehicular data and of the mobile device data to at least one of the two or more users.

## Brief description of the Figures

Some examples of apparatuses and/or methods will be described in the following by way of example only, and with reference to the accompanying figures, in which

| | |
|---|---|
| Fig. 1a and 1b | show flow charts of embodiments of a computer-implemented method for aligning vehicular data of one or more vehicles with mobile device data of two or more mobile devices; |
| Fig. 1c | shows a block diagram of an embodiment of an apparatus for aligning vehicular data of one or more vehicles with mobile device data of two or more mobile devices; |
| Fig. 2 | shows a schematic diagram of a dynamic user-centric account graph; |
| Fig. 3 | shows a block diagram of a multi-stream data collection; |
| Fig. 4 | shows a schematic overview of the workings of an ID (Identifier) graph; |
| Figs. 5a and 5b | show a schematic diagram of a dynamic alignment between user and vehicle; |
| Fig. 6 | shows a schematic diagram of a mapping between user identifier, vehicle identifier and account identifier; |
| Fig. 7 | shows a schematic diagram of a learning approach for device and user alignment; and |
| Fig. 8 | shows a schematic diagram of an alignment of trip data to a user. |

## Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

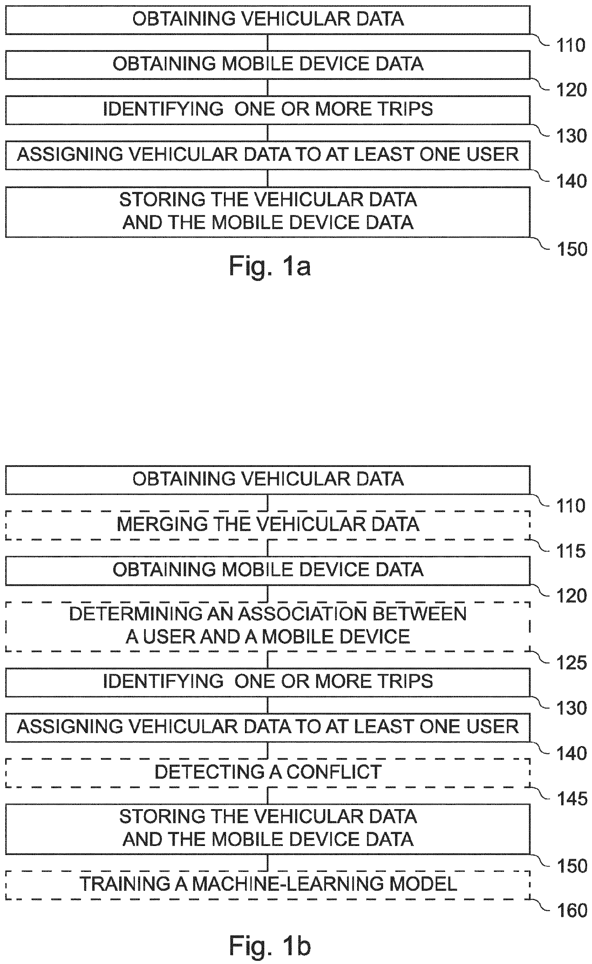

Fig. 1a and 1b show flow charts of embodiments of a computer-implemented method for aligning vehicular data of one or more vehicles with mobile device data of two or more mobile devices. The method comprises obtaining 110 the vehicular data of one or more vehicles, the one or more vehicles having a vehicle identifier. The one or more vehicles are associated with a single digital account identifier. The method comprises obtaining 120 the mobile device data of two or more mobile devices being associated with the digital account identifier. The digital account identifier are associated with two or more users using the same digital account identifier. Each of the mobile devices are associated with one of the two or more users. The method comprises identifying 130 one or more trips taken with the one or more vehicles based on the vehicular data and one or more trips taken with the two or more mobile devices based on the mobile device data. The method comprises assigning 140 vehicular data of the one or more trips taken with the one or more vehicles to at least one of the two or more users, wherein vehicular data of a trip is assigned to at least one of the two or more users based on a match between the trip taken with the one or more vehicles and a mobility pattern of one of the two or more users The method comprises assigning 140 the mobile device data to at least one of the two or more users based on the association between the two or more mobile devices and the two or more users. The method comprises storing 150 the vehicular data and the mobile device data based on the assignment of the vehicular data and of the mobile device data to at least one of the two or more users.

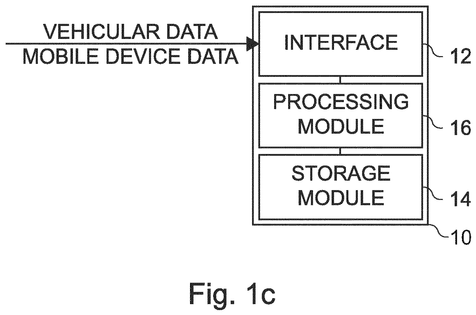

Fig. 1c shows a block diagram of an embodiment of a corresponding apparatus 10 for aligning vehicular data of one or more vehicles with mobile device data of two or more mobile devices. The apparatus 10 comprises an interface 12, a storage module 14 and a processing module 16 that is coupled to the interface 12 and the storage module 14. The processing module 16 may be configured to execute the method of Figs. 1a and/or 1b, e.g. in conjunction with the interface 12 and the storage module 14. For example, the processing module 16 is configured to obtain the vehicular data of one or more vehicles via the interface 12. The one or more vehicles have a vehicle identifier. The one or more vehicles are associated with a single digital account identifier. The processing module 16 is configured to obtain mobile device data of two or more mobile devices being associated with the digital account identifier via the interface 12. The digital account identifier is associated with two or more users using the same digital account identifier. Each of the mobile devices is associated with one of the two or more users. The processing module 16 is configured to identify one or more trips taken with the one or more vehicles based on the vehicular data and one or more trips taken with the two or more mobile devices based on the mobile device data. The processing module 16 is configured to assign vehicular data of the one or more trips taken with the one or more vehicles to at least one of the two or more users. Vehicular data of a trip is assigned to at least one of the two or more users based on a match between the trip taken with the one or more vehicles and a mobility pattern of one of the two or more users . The processing module 16 is configured to assign the mobile device data to at least one of the two or more users based on the association between the two or more mobile devices and the two or more users. The processing module 16 is configured to store the vehicular data and the mobile device data in the storage module based on the assignment of the vehicular data and of the mobile device data to at least one of the two or more users.

The following description relates to both the method of Figs. 1a and/or 1b and the apparatus 10 of Fig. 1c.

Embodiments relate to a computer-implemented method, apparatus and computer program for aligning vehicular data of one or more vehicles with mobile device data of two or more mobile devices. In other words, embodiments may be used to combine data from different sources, i.e. the one or more vehicles and the two or more mobile devices, and to assign the combined data to one of the users of the two or more mobile devices. The combined data may be user-aligned, i.e. aligned/combined on a per-user basis. In other words, the vehicular data and the mobile device data being generated by the same user may be combined and separated from the vehicular data and mobile device data of other users. This data may be subsequently used for data analytics, e.g. by training a user-specific machine-learning model based on the collected data for the respective user. Embodiments may thus relate to labeling (all) the collected data on a per user basis, rather than using the original account identifier. Data may originate from different sources with different identifiers, e.g. some portion/stream of the data may only comprise a vehicle ID, and some portion/stream may have an account identifier and user identifier. Embodiments may be used fuse the data together and label the data by user identifier, to be able to learn personal behavior that can be used for improving personal user experience. Data can be anything the system collects, e.g. a trip, a visit location, an odometer, a current, gas or electricity capacity, a point of interest, a refueling brand / cost / location / price / liter or KW /, a temperature, an interior setting such as Air Conditioning, etc. which may be assigned to the different users on a per-trip basis. For example, for a single trip, both vehicular and mobile device data may comprise the data about the trip, mobility pattern, as well as the visit, e.g. that the user stays at a particular location (e.g. a certain supermarket) at a specific time and data. Any data point from the different sources (pertaining to said trip) may be assigned to the user identifier of the user that has taken that trip.

A first part of the approach relates to a collection of the data: The vehicular data is collected from the one or more vehicles (or from one or more further entities that have collected information about the vehicle). In other words, the method comprises obtaining 110 the vehicular data of the one or more vehicles, e.g. from the one or more vehicles and/or from one or more entities collecting vehicular data about the one or more vehicles. The vehicular data may comprise payload data, e.g. data that has been collected by, or about, the respective vehicle, and metadata, e.g. the vehicle identifier and the digital account identifier. For example, the payload data may comprise information on one or more settings of the vehicle, information about a driving behavior of a driver of the vehicle, information about breaks taken a driver of the vehicle, a use of assistance functionality etc. In embodiments, each vehicle has a (unique) vehicle identifier, such as the Vehicle Identification Number (VIN) of the vehicle. In addition, each vehicle is associated with a digital account identifier, e.g. linked to, or signed into a digital account that is identified by the digital account identifier. The digital account may be a digital account that is suitable for remotely controlling one or more functions of one or more vehicles and/or for configuring a vehicle. For example, this digital account may be used on a mobile device, e.g. to remotely engage a heating system of a vehicle or to obtain a position of the vehicle. The digital account is, in embodiments, also associated with two or more users that use the same digital account, via two or more mobile devices. For example, the digital account may be shared by the two or more users, which may for example, be members of the same family. Each of the two or more users may have one or more mobile devices (resulting in the two or more mobile devices), which are logged into the digital account (and thus are also associated with the digital account identifier). In other words, the two or more users are associated with the digital account identifier via the two or more mobile devices. Each of the mobile devices may be a personal device, e.g. a device that is predominately used by a single user of the two or more users, and which may change users infrequently. Within the digital account, the two or more users may be differentiated by their respective mobile device or mobile devices. Also, the two or more users may be differentiated within the digital account, e.g. each user may have a user identifier or a user profile within the digital account, the users' identifiers and/or user profiles being associated with the same digital account identifier.

As laid out above, the vehicular data may originate from a plurality of different sources, e.g. from different vehicles and/or from different entities or services that collect information/data about the one or more vehicles. In other words, the vehicular data may originate from a plurality of different vehicular data sources. Each of the plurality of different sources may contribute a portion of the vehicular data. The vehicular data may have at least partially been collected with incomplete identifier information. In other words, each portion of the vehicular data may be associated with a vehicle identifier, but might not necessarily associated with the digital account identifier or a user identifier of the one or more users. The vehicle identifier or vehicle identifiers of the one or more vehicles may be used to merge the vehicular data together, e.g. so that all of the vehicular data is at least associated with both the respective vehicle identifier and the digital account identifier. In other words, as shown in Fig. 1b, the method may comprise merging 115 the vehicular data from the plurality of data sources based on a vehicle identifier of the respective vehicle. After merging the data, each portion of the vehicular data may be associated with the digital account identifier. In at least some embodiments, the vehicular data is retroactively merged (i.e. merged at least one week (or at least one month, or at least one year) after the respective portion of the vehicular data is generated) based on the vehicle identifier of the respective vehicle.

The mobile device data is collected from the one or more mobile devices. Accordingly, the method comprises obtaining 120 the mobile device data of two or more mobile devices being associated with the digital account identifier. Each of the two or more mobile devices may contribute a portion of the mobile device data. In this case, each portion of the mobile device data may be associated with (i.e. comprise) the digital account identifier. Each portion of the mobile device data may be further associated with (i.e. comprise) a mobile device identifier, i.e. the different portions of the mobile device data may be differentiated by mobile device using the mobile device identifier. Each of the mobile devices are also associated with one of the two or more users. In other words, each of the two or more mobile devices is used by a (single) user of the two or more users at a time. Accordingly, the mobile device identifier may be used to infer a user of the two or more users that is associated with a portion of the mobile device data (based on the mobile device identifier associated with the mobile device data and the mobile device, and based on the association between the mobile device and the user of the two or more users).

This association between mobile devices and users may be established at some point of time. For example, via a human interface, each of the users may select their respective two or more mobile devices that are logged into the digital account, thereby associating the respective one or more devices with the respective users. If a new (i.e. additional, previously unknown) mobile device is added, the new mobile device may be (automatically and) implicitly associated with a user of the two or more users based on a similarity of a mobility pattern of the new mobile device and based on a mobility pattern of the respective user, or the new mobile device may be associated with a user of the two or more users by prompting the two or more users (or a combination thereof), e.g. using a push notification that is displayed by the mobile devices (e.g. of the user that is deemed be associated with the mobile device) or by a head unit of the respective vehicle. In other words, as shown in Fig. 1b, the method may comprise determining 125 an association between a user and a mobile device (e.g. the new mobile device) based on a similarity measure between a mobility pattern of the mobile device and a mobility pattern of the user. The mobility pattern and similarity measure will be introduced in more detail below. For example, if the similarity measure yields a similarity that is above a threshold for a user of the two or more users, the mobile device may be associated with said user of the two or more users (unless there is a conflict with another mobile device of the user). The method may comprise detecting 145 a conflict between the one or more trips taken with the one or more vehicles, the one or more trips taken with the two or more mobile devices, and/or a mobility pattern of the two or more users. In this context, there may be a conflict if the new mobile device has a mobility pattern that matches the mobility pattern of the user, but another mobile device of the user has taken one or more trips that have occurred at the same time as one or more further trips the new mobile device has taken, and if the one or more trips and the one or more further trips do not match. The method may comprise adding a new user to the two or more users or changing an association between a user and a mobile device if a conflict is detected. For example, a new user may be added if there is a conflict between the new device and all of the two or more users. An association between a user and a mobile device may be changed, if one of the mobile devices of a user repeatedly takes trips that are in conflict with the trips taken by the other mobile devices of the same user. In this case, a change of a user at the one mobile device may be determined. This mobile device may be subsequently deleted, associated with another user of the two or more users, or associated with a new user to be added to the two or more users, e.g. based on the similarity-based association introduced above. After a user is associated with a device, e.g. after a user of the mobile device has changed, this association may be confirmed by the user. In other words, a user may be associated with a mobile device based on a user-based confirmation of the association if the user if a mobile device is changed.

After obtaining the respective data sets, individual trips may be determined within the data sets, which may subsequently be used to align (i.e. combine or match) the data from the different sources. The method comprises identifying 130 one or more trips taken with the one or more vehicles based on the vehicular data and one or more trips taken with the two or more mobile devices based on the mobile device data. For example, each trip of the one or more trips taken with the one or more vehicles and/or of the one or more trips taken with the two or more mobile devices may be characterized by at least one of a starting time, an ending time, a duration, a starting position, an ending position, and a route. The method may comprise extracting a plurality of positions with corresponding timestamps from the vehicular data and mobile device data, and detecting a continuous movement between the plurality of timestamps. Accordingly, the vehicular data and the mobile device data may each comprise information on a plurality of positions and corresponding timestamps. If a continuous movement is detected for a period of time, this continuous movement may be deemed a trip, and the starting position, the ending position, and the route may be determined based on the plurality of positions of the trip, and the starting time, the ending time and the duration may be determined based on the corresponding timestamps. In case of the vehicular data, a trip may further be denoted by vehicular data indicating an activation and a deactivation of a motor of the vehicle. These trips may be subsequently used to match the trips detected in the vehicular data with the trips detected in the mobile device data. In the context of the present disclosure, a trip taken by a vehicle may be trip that the vehicle has actively driven, while a trip taken by a mobile device may be a trip on which the mobile device was taken (e.g. by its user).

Furthermore, the method may comprise determining the mobility patterns of the one or more users and/or of the one or more mobile devices. As has been specified above, the mobile device data may comprise information on a plurality of positions and corresponding timestamps, i.e. a plurality of positions at which the mobile device has been located at the time of the corresponding time stamps. These plurality of positions may be processed to determine the one or more trips taken with the two or more mobile devices. Based on the one or more trips, the mobility pattern of the two or more mobile devices may be calculated.

For example, each mobility pattern may be based on a plurality of features related to the mobility pattern. These features may be used to calculate the mobility pattern, which may be indicative of the trips a user or mobile device has taken (i.e. indicative of a frequency, staying time, duration, location and/or time of the trips the user or mobile device has taken). The mobility pattern may be characteristic for a user or mobile device, i.e. the mobility pattern of a first user/mobile device may differentiate the first user from a second user, e.g. as the pattern of the trips the first user has taken is different from a pattern of trips the second user or mobile device has taken. For example, the plurality of features comprises one or more elements of (e.g. a plurality of elements of) the group of an average staying duration at a location per day, an average staying duration at a home location per day, an average staying duration at a work location per day, average staying duration at a location in a given hour, an average staying duration at a home location in a given hour, an average staying duration at a work location in a given hour, a frequency at which a user leaves or returns to a location in a given hour, an average vehicle travel duration during a given hour, and an average staying duration in a given hour, an average number of trips per day or workday or in a given timeframe of a day or workday, an average number of trips per day or workday or in a given timeframe of a day or workday between a pre-defined starting location and a pre-defined destination, an average staying time at a starting location of a trip, and an average staying time at a destination of a trip. Such features may be used as components of the mobility patterns of the users and mobile devices, e.g. as shown in the later parts of the present disclosure, and used to calculate the similarity (measure) between different users or users and mobile devices. Alternatively, instead of using static formulae to determine the similarity measure, a machine-learning model may be used to determine the similarity measure. A mobility pattern of a user may be based on the mobility patterns of the mobile devices associated with the user, i.e. the mobility patterns of the mobile devices associated with a user may be combined to determine the mobility pattern of the user. In general, the mobility patterns of the mobile devices and of the users may be generated automatically, e.g. using the plurality of features and based on the one or more trips taken with the two or more mobile devices.

The method further comprises assigning the vehicular data and the mobile device data to the two or more users. In embodiments, digital accounts being used by a single user are also supported. In this case, no differentiation on a per-trip basis might be required, and the data might be assigned to the single user in a straight-forward manner.

In other words, if the digital account is used by a single user, all of the vehicular data and of the mobile device data may be assigned to the single user. More complexity is brought when two or more users use the same account. In this case, embodiments may be used to assign the vehicular data and the mobile data to the right user.

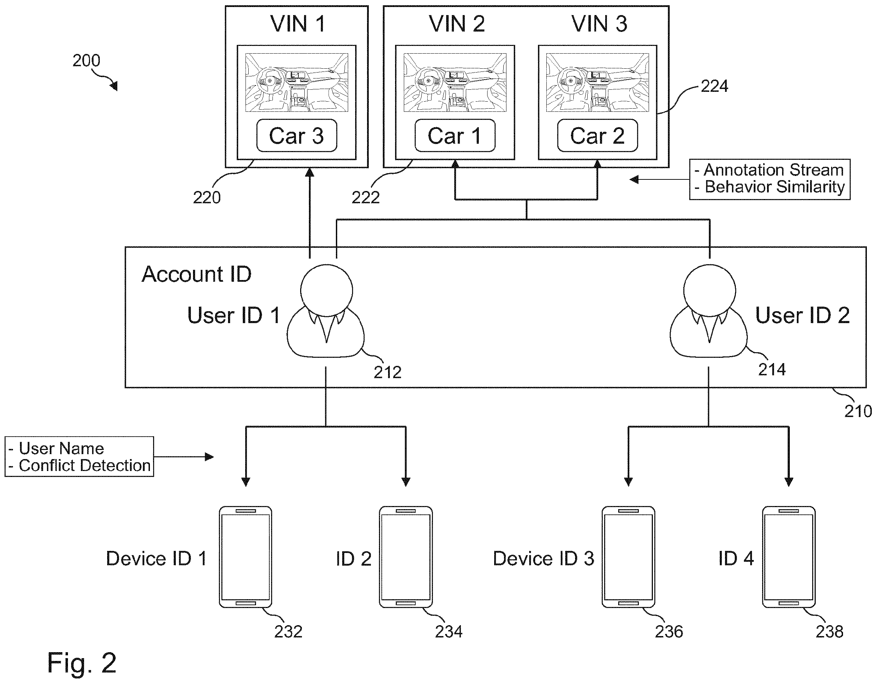

The method comprises assigning 140 vehicular data of the one or more trips taken with the one or more vehicles to the corresponding user or users, i.e. to at least one of the two or more users. In other word, for each trip, the respective vehicular data may be assigned to one of the users, e.g. in order to be subsequently user for user-specific data analytics. In general, the vehicular data may be assigned to the at least one user using a dynamic user-centric account graph. In embodiments, a dynamic user-centric account graph is a graph that comprises nodes and edges. In Fig. 2, such a dynamic user-centric account graph is shown. The dynamic user-centric account graph comprises the two or more users as nodes, which are at the center of the dynamic user-centric account graph. The dynamic user-centric account graph further comprises the two or more mobile devices and the one or more vehicles (as nodes). Each of the two or more users is linked with one or more mobile devices and with one or more vehicles within the dynamic user-centric account graph (via the edges). This dynamic user-centric account graph may be used to model the relationships between vehicles, users and mobile devices, e.g. to determine that, if a mobile device has taken a trip, and the vehicle has taken the same trip, that the user associated with the mobile device has been the one who has taken the trip. As indicated above, different measures may be taken to assign the vehicular data of a trip to at least one of the two or more users (vehicular data of a trip may be assigned to two or more users, for example). Preferably, the vehicular data may be assigned to a user of the two or more users based on a match between the trip taken with the one or more vehicles and a trip taken with the two or more mobile devices. The match between a trip taken with one of the one or more vehicles and a trip taken with a mobile device may be computed based on at least one of a starting time, an ending time, a duration, a starting position, an ending position, and a route of the respective trips or mobility patterns. For example, one or more elements of the starting time, ending time, duration, starting position, ending position, and route of the respective trips may be compared, and if a difference between two trips is lower than a threshold, a match may be determined. In this case, the vehicular data of the trip taken with one of the one or more vehicles may be assigned to the user associated with the mobile device that has taken the same trip.

If, for a trip of the one or more trips of the one or more vehicles, no match can be found to a trip of the one or more trips taken with a mobile device of the two or more mobile device, a similarity between the trip taken with the vehicle and a mobility pattern of a user of the one or more users may be used to assign the vehicular data of the trip to a user. In other words, the vehicular data may be assigned to a user of the two or more users based on a match between the trip taken with the one or more vehicles and a mobility pattern of one of the two or more users. Again, the match between a trip taken with one of the one or more vehicles and a mobility pattern of one of the two or more users may be computed based on at least one of a starting time, an ending time, a duration, a starting position, an ending position, and a route of the respective trips or mobility patterns. For example, one or more elements of the starting time, ending time, duration, starting position, ending position, and route of the trip and the corresponding features of the mobility pattern may be compared, and if similarity between the trip and the mobility pattern is higher than a threshold, a match may be determined. In other words, the match between the trip taken with the one or more vehicles and the mobility pattern of one of the two or more users may be computed based on a similarity between the trip taken with the one or more vehicles and the mobility pattern of one of the two or more users. For example, trip may be compared with the features of the mobility patterns of the two or more users, and the one user of the two or more users may be chosen for whom the trip best matches the mobility pattern. An exemplary similarity function is provided at a later point of the present disclosure, in the section relating to a user and vehicle alignment algorithm.

As stated previously, the similarity (between a trip and a mobility pattern or between two mobility patterns) may be computed based on a similarity measure. The similarity measure may comprise a weighting factor, which may be used to increase the difference between different mobility patterns, i.e. exaggerating the difference for the mobility patterns to be compared. The one or more weighting factors may be calculated, improved and/or optimized in order to increase the difference between the mobility patterns of different users in the similarity measure. Accordingly, the method may comprise improving (i.e. optimizing) one or more weighting factors for the similarity measure using a learning algorithm based on one or more mobility patterns of the two or more users and/or the one or more trips taken with the one or more vehicles. The one or more weighting factors may be improved with the aim of increasing the difference between the mobility patterns of different users in the similarity measure. The one or more weighting factors may be improved in a supervised manner, e.g. using gradient descent or variations thereof.

If vehicular data is assigned to a user based on a similarity measure, conflict detection may be used to determine situations, in which the trip and the mobility of the user are similar, but in which a trip taken with a mobile device associated with a user is in conflict with the assignment. If, for example, the trip is similar to the mobility pattern of the user, but one of the mobile devices indicates that the user has taken a different trip (and therefore cannot have taken the trip), this trip might not be assigned to be user. In this case, a mismatch between the trip taken with one of the one or more vehicles and a trip taken with a mobile device associated with a user of the two or more users may be determined. In other words, the vehicular data may be assigned to a user of the two or more users based on a mismatch between the trip taken with the one or more vehicles and a trip taken with the two or more mobile devices. Or rather, the assignment of a trip to a user of the two or more users may be foregone, if a mismatch between the trip taken with the one or more vehicles and a trip taken with a mobile device associated with the user is found. Again, the mismatch between a trip taken with one of the one or more vehicles and a trip taken with a mobile device may be computed based on at least one of a starting time, an ending time, a duration, a starting position, an ending position, and a route of the respective trips or mobility patterns.

The method comprises storing 150 the vehicular data and the mobile device data based on the assignment of the vehicular data and of the mobile device data to at least one of the two or more users. In this context, (all of) the vehicular data and the mobile device data may be stored together, not only the data used for recreating the trips. For example, the (entire) payload data of the vehicular data and/or mobile device data may be stored together. Accordingly, also the mobile device data is assigned to one of the users. In other words, the method comprises assigning the mobile device data to at least one of the two or more users based on the association between the two or more mobile devices and the two or more users. The method may comprise assigning the mobile device data to a user of the two or more users being associated with the respective mobile device. For example, for each trip taken with a mobile device of the one or more mobile devices, the respective mobile device data may be assigned to a user of the two or more users being associated with the mobile device providing the respective mobile device data. The mobile device data may be assigned to the two or more users based on the association between the two or more mobile devices and the two or more users. The vehicular data and the mobile device data may be stored together in a data base or data structure, e.g. by user. In other words, the vehicular data and the mobile device data may be stored in a manner that allows a retrieval of (all) vehicular data and mobile device data assigned to a specific user of the two or more users.

Additionally, the method may comprise providing the stored vehicular data and mobile device data to one or more further entities or services, i.e. to the entities or services that have provided the vehicular data. The provision of the stored vehicular data and mobile device data may be based on an access restriction and/or a privacy requirement of the entity or service that the stored vehicular data and mobile device data is to be provided to.

In at least some embodiments, the method may further comprise training 160 a machine-learning model to create a user-specific machine-learning model using the combined vehicular and mobile device data being associated with the respective user. For example, the machine-learning model may be trained (only) using the vehicular and mobile device data that is associated with the respective user. The machine-learning model may be suitable for providing a personalized assistance function for the user.

At least some embodiments are based on using a machine-learning model or machine-learning algorithm. Machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g. a classification algorithm, a regression algorithm or a similarity learning algorithm. Classification algorithms may be used when the outputs are restricted to a limited set of values, i.e. the input is classified to one of the limited set of values. Regression algorithms may be used when the outputs may have any numerical value (within a range). Similarity learning algorithms are similar to both classification and regression algorithms, but are based on learning from examples using a similarity function that measures how similar or related two objects are.

Apart from supervised or semi-supervised learning, unsupervised learning may be used to train the machine-learning model. In unsupervised learning, (only) input data might be supplied, and an unsupervised learning algorithm may be used to find structure in the input data, e.g. by grouping or clustering the input data, finding commonalities in the data. Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge, e.g. based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine. Support vector machines (i.e. support vector networks) are supervised learning models with associated learning algorithms that may be used to analyze data, e.g. in classification or regression analysis. Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model.

A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The interface 12 may correspond to one or more inputs and/or outputs for receiving and/or transmitting information, which may be in digital (bit) values according to a specified code, within a module, between modules or between modules of different entities. For example, the at least one interface 12 may comprise interface circuitry configured to receive and/or transmit information.

In at least some embodiments, the storage module 14 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

In embodiments the processing module 16 may be implemented using one or more processing units, one or more processing devices, any means for processing, such as a processor, a computer or a programmable hardware component being operable with accordingly adapted software. In other words, the described function of the processing module 16 may as well be implemented in software, which is then executed on one or more programmable hardware components. Such hardware components may comprise a general purpose processor, a Digital Signal Processor (DSP), a micro-controller, etc.

More details and aspects of the method, apparatus and computer program are mentioned in connection with the proposed concept or one or more examples described above or below (e.g. Fig. 2 to 8). The method, apparatus and computer program may comprise one or more additional optional features corresponding to one or more aspects of the proposed concept or one or more examples described above or below.

In many companies, data is collected and used, e.g. in big data analytics. Due to the complexities of management hierarchy, it may be challenging to implement one data collection strategy, as different business organizations (within the company) collect the data on their own, e.g. CRM (Customer Relationship Management), user analytics, telemetry from different type of devices, e.g. phone and vehicle. Those devices have different behaviors. For example, a mobile device may be a personal device (i.e. used by a single user) but may change (e.g. given to another user or exchanged for another device). A vehicle and a service account for managing that vehicle may be shared among family members. This may add to the challenge of implementing one data collection, particularly as different features have different requirements.

For example, a company may comprise multiple business units having different feature requirements leading to individual data collection solutions, which results into several data collection systems within the same company, but less dependency from a development perspective. This may lead to a high effort and costs due to the data duplication, repeated development and operation effort, more communication bandwidth, storage and computing resources, and lack the advantages of a holistic data asset due to fragmented data and platforms, leading to inefficient usage of data. Furthermore, the fragmented platforms may have inconsistent consumer data privacy approaches due to different implementation by different teams. The fragmentation may further limit the value of the data assets as they are collected, stored and processed in different systems or components, so that there is a high complexity in sharing the data. While such data collection may work in Small and Medium Enterprises (SMEs), as a single stream might suffice for the entire company, such a system is hard to extend as the company grows as the company cannot decide the data and features at one time. Embodiments may be used to align the data collected by different systems that relate to the same users, e.g. in a vehicular environment.

Embodiments may provide a highly efficient, flexible and holistic data collection approach to support contextual and personal service centered at personal data intelligence technology. In embodiments, dynamic user-centric ID graph learning may be used to enable holistic data collected from different sources. Embodiments may provide a novel solution for building a user-centric account graph dynamically, thus providing or enabling the multi-stream data collection.

The multi-stream data collection may be valuable in data analytics, as machine learning over big data may play a critical role in enabling contextual personal experience, thereby enabling a technical differentiation from competitors. It may be, however, challenging to deal with efficient holistic data solution, while taking user's privacy into account. This may be the case because there are multiple business units having different feature requirements, leading to own data collection solution, resulting into a fragmented data solution. The costs of this may be high, due to the duplication of data processing and development, in terms of communication bandwidth, storage and computing resource, but still lack a holistic data asset due to fragmented data platforms leading to inefficient usage of data. It may also be hard to manage user data privacy due to fragmented data collection strategy by different teams.

Multi-stream data collection, according to embodiments, from each device may be more focused, decoupled, cost efficient, extensible, but it may require the dynamic user-centric account graph learning as several users may own and change several mobile devices, share the same account and vehicle. For example, in a survey taken, only 50-70% of users of an account for accessing vehicles use the account with a single vehicle and a single mobile device. In the remaining 30-50%, embodiments, e.g. the dynamic user-centric graph, may be used to assign the vehicular data to a user using the account. With the graph, the system may be able to group the data by user, rather than account, device or vehicle. Embodiments may provide a novel solution to build a user-centric account graph dynamically, thus make the multi-stream data collection possible. In the context of this application, embodiments relate to a method for aligning vehicular data. The concept may, however, also be used in other applications.

In embodiments, an account may be used to manage functions of a vehicle, which is associated with the account. Such accounts are often shared among members of a family, such that two or more users share the same account, using two or more mobile devices. Additionally, such an account may also be linked (i.e. associated with) two or more vehicles. Accordingly, the account may have multi-users, multi-devices, and multi-vehicles. In embodiments, an account graph may be may be created to reflect the relationships between vehicles, account, users and mobile devices. Fig. 2 shows an example of an account graph 200. The account graph comprises an account 210 having an Account Identifier and two users 212 (User Identifier (ID) 1) and 214 (User Identifier 2). Both users 212; 214 use cars 1 (222) and 2 (224) (having Vehicle Identification Numbers, VIN, 2 and 3), and the user 212 with user ID 1 further uses car 3 (226, VIN 3). The user 212 with User ID 1 further uses mobile devices 232; 234 having device IDs 1 and 2 (e.g. an iOS and an Android device), and the user with User ID 2 users mobile devices 236; 236 having device IDs 3 and 4 (e.g. an iOS and an Android device). In embodiments, mobile devices are used, as they are personal and can be used with the account, but embodiments are extensible to new types of devices. The mobile devices may be used as user ID, or to derive the username of the users, and may be used in conflict detection, e.g. to identify situations, in which a trip taken by a vehicle is assigned to the wrong user. As the cars 1 and 2 (222 and 224) are used by both users, the vehicular data generated by the vehicles may be annotated in an annotation stream, e.g. based on behavior similarity.

The account graph shown in Fig. 2 is dynamic, as a user can drive a different vehicle (and add it to the device) or get new device. Also, a vehicle can be driven by different users. Therein may also lie a challenge, as each device is able to generate a data stream. Without the account graph, all data from all device streams may be merged into the Account ID, rather than the User ID (as the vehicle might not be able to detect who is using the vehicle). This may inhibit a personalization of the experience and service as no true user based personal data may be available. Embodiments are based on using a dynamic account graph to align all the data to a given user, rather than shared account.

In a vehicular environment, in many cases, data is naturally coming from different type of devices:
Data from vehicle: labelled by vehicle ID (VIN), vehicle(s) can be shared by several users, rather taking it as personal "device". In other words, a user-vehicle real time relation may be dynamic.

Data from mobile phone (i.e. mobile device): a mobile device may need to be logged into an account in order to have personal experience, but a login account may be be shared by several users, several devices, several apps and vehicles. A mobile device may, however, be the personal device, e.g. distinguished by user name or device ID. For the latter case, one user can have several mobile phones used at the same time, or buy new phone to replace an old phone or give out the old phone to someone else. Thus each user may be recognized by Account ID (AID) and device ID (DID). A single user may have several DIDs, thus they may all be aligned and merged into the same unique User ID (UID). A user-device relation may be changed, but is usually changed infrequently.

Embodiments may provide an algorithmic solution to enable the alignment, e.g. leveraging user similarity measure and mobility conflict detection.

Embodiments may provide a multi-stream data collection to collect the data from vehicle (i.e. the vehicular data) and mobile phone (i.e. the mobile device data) as separate streams, respectively. Embodiments may use a decoupled design and may be modular. Different systems can subscribe to the data they require, e.g. a vehicle service, personal service, context service, etc. A change request or extension into a new source of device may not impact existing streams. In such systems, data privacy may be centrally managed. For example, full General Data Protection Regulation support may be provided for personal data. Vehicle data may be anonymized if only a vehicle data stream only is stored and process. By using a user centric account graph modeling, the system may be able to align all the data as holistic data asset.

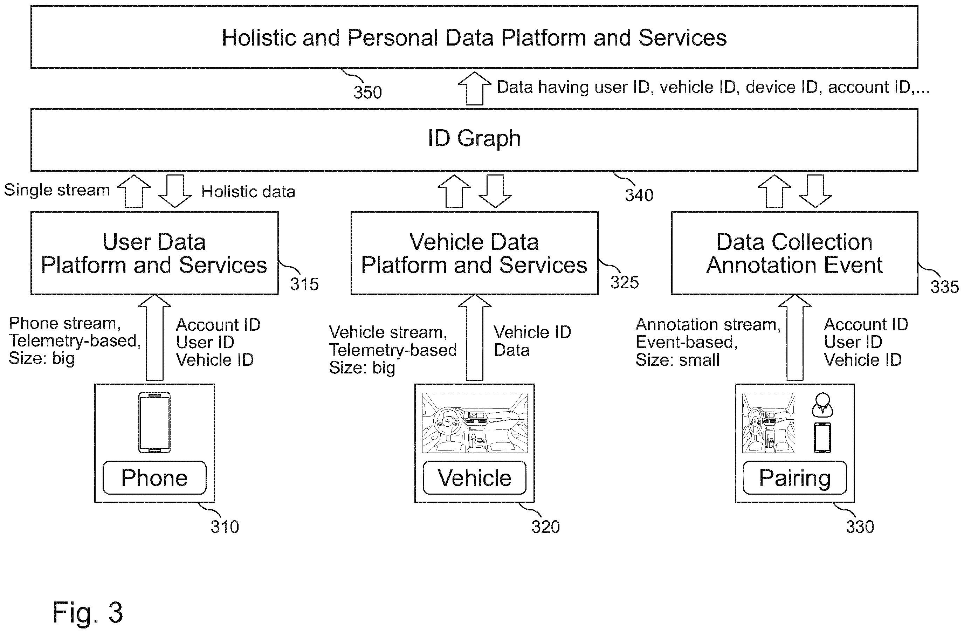

Fig. 3 shows a block diagram of such a multi-stream data collection. A mobile phone 310 may be used to provide a phone stream (i.e. the mobile device data), which may be telemetry-based and which may have a large size. The phone stream may comprise or indicate the Account ID, the User ID and the data. This phone stream may be collected via user data platform and services 315, and merged via ID Graph 340. A vehicle 320 may be used to provide a vehicle stream (i.e. the vehicular data), which may be telemetry-based and which may have a large size. The vehicle stream may comprise or indicate the Vehicle ID and the data. The vehicle stream may be collected via vehicle data platform and services 325, and merged via ID Graph 340. Furthermore, a pairing system 330 may be used to provide an annotation stream, which may be event-based and have a small size, and which provides an alignment between Account ID, User ID and Vehicle ID. The annotation stream may be provided via a data collection annotation event 335, and merged into the ID Graph. Through the ID graph, data having a user ID, vehicle ID, device ID and account ID may be collected within holistic and personal platform and services 350. From each of the user data platform and services 315, the vehicle data platform and services 325 and the data collection annotation event, a single stream may be provided to the ID Graph, and holistic data may be provided back to the respective platforms, services and events.

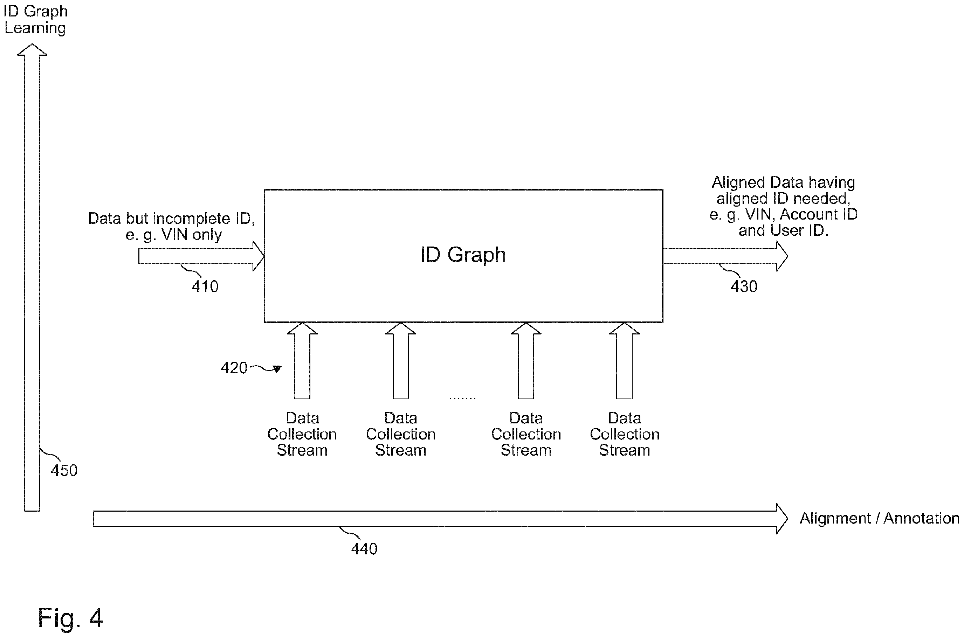

Fig. 4 shows a schematic overview of the workings of the ID graph. Data 410 with incomplete ID, e.g. VIN number is fed into the ID Graph. Multiple data collection streams 420 are also provided into the ID graph. Aligned data 430 having an aligned ID is output from the ID Graph, e.g. having a VIN, an Account ID and a User ID. The alignment 440 may be performed using the ID graph. By providing the data collection streams 420 to the ID Graph, the ID Graph learns 450 the alignment between the different Identifiers.

Embodiments may provide an alignment of data for the holistic data asset. The data collection streams may comprise three components: Data collection from the vehicle (e.g. the vehicular data), data collection from the mobile phone (e.g. the mobile device data) and segment annotation data collection. The data collection from the vehicle may collect the data from the vehicle directly and periodically, e.g. GPS (Global Positioning System) location tracking, speed, odometer, parking, temperature, etc. The data collection from the vehicle may be labelled by Vehicle ID (VIN) (i.e. may comprise a vehicle identifier). The data collection from the mobile phone may collect the data from mobile phone, e.g. location data by cell identifier, geofence or GPS if needed, calendar entry, etc. The data collection from the mobile phone may be labelled by User ID (UID) through Device ID or user name managed by account graph. The segment annotation data collection may comprise information a data pairing status. The data pairing status might only be collected when a vehicle trip starts and ends, e.g. from a vehicle map, no payload for telemetry. Data may be jointly labelled by paired VIN, AID and UID managed by account graph.

In data alignment, the data may be aligned by annotation data. For vehicle data labelled by VIN, a corresponding VIN may be found in the annotation stream. Its associated UID may be used to label the data. Without annotation, an algorithm is proposed in the following to infer the annotation.

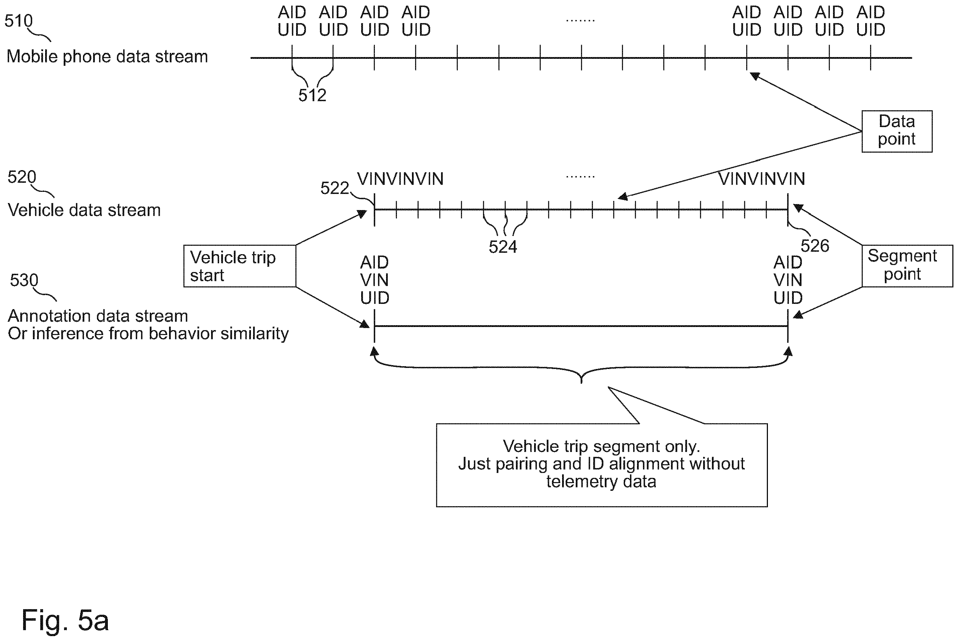

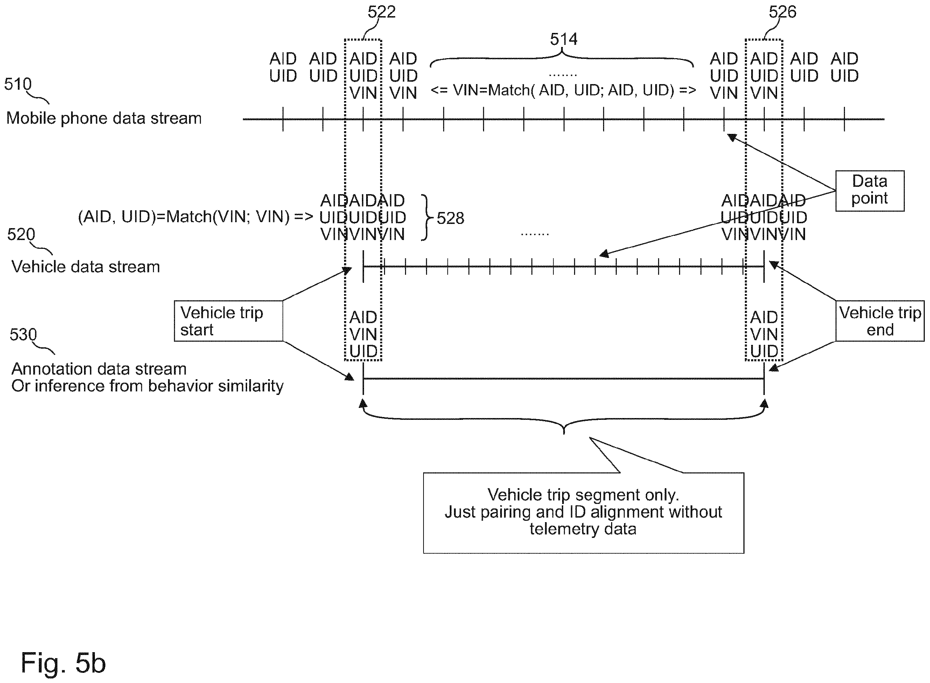

Figs. 5a and 5b show a dynamic alignment between user and vehicle. Figs. 5a and 5b show a mobile phone data stream 510 (e.g. the mobile device data), for which the Account ID and the User ID are known at regular points 512 in time (represented by data points 512 on a graph). Figs. 5a and 5b further show a vehicle data stream 520, which begins 522 when the trip of the vehicle starts, and for which the VIN are known at regular points 524 in time (also represented by data points 524 on a graph), until the end 526 of the segment. The annotation data stream 530, or inference from behavior similarity may be used to align the Account ID, the VIN and the UserID. The annotation data stream may be used for the vehicle trip segment 522-526 only, and might comprise just pairing and ID alignment without telemetry data.

Using the annotation data stream, the VIN may be associated 514 with the mobile phone data stream for the duration of the trip segment (if there is a match between the VIN and the Account ID and User ID in the annotation data stream), and the vehicle data stream may be associated 528 with the Account ID and User ID, also for the duration of the trip segment (if there is a match between the Account ID and User ID and the VIN in the annotation data stream).

Embodiments may provide an explicit approach for aligning the User ID and the data. To build a holistic ID alignment, the dynamic user centric account graph may be built among shared account ID (AID), vehicle ID (VIN), User ID (UID) and Device ID (DID). For any new device, an app can pop-up and ask user to confirm or give the name, e.g. "Mr. Smith". Regardless of what and how many devices a user has, it may group all data under the same UID. For any vehicle a user drives, the system can transmit the annotation data by two ends of the trip from the user login, e.g. from an onboard app, without telemetry payload.

For push notification to devices, the system may proactively push the message to all active devices a user has, or selectively to a primary device that may generate most of the usage data, or just to a recently used device. The system may be applicable to multiple phones and multiple vehicles. The system may provide an ID mapping, i.e. it may manage the mapping between UID by user name, and all devices a user has confirmed may be mapped to the same user name.

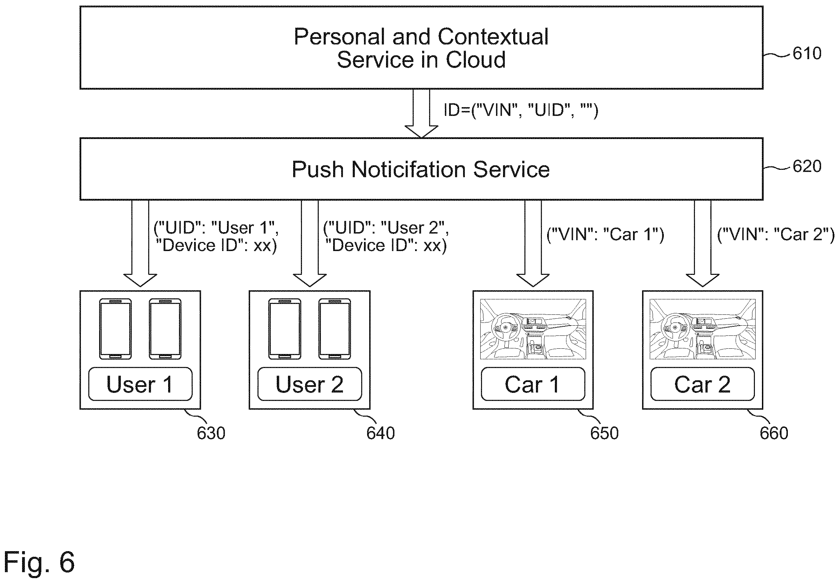

An example is shown in Fig. 6. In Fig. 6, an account may be shared by multiple users, multiple vehicles and multiple mobile phones. A personal and contextual service 610 in the cloud may provide a request specifying an ID = ("VIN", "UID, "") to a push notification service 620, which may push a notification to the different mobile phones and vehicles, e.g. to User 1 630 by specifying ("UID": "User 1", "Device ID": xx), to User 2 640 by specifying ("UID": "User 2", "Device ID": xx), to Car 1 650 by specifying ("VIN": "Car 1") and to Car 2 660 by specifying ("VIN": "Car 2"). Fig. 6 may show the mapping between UID, VIN and AID.

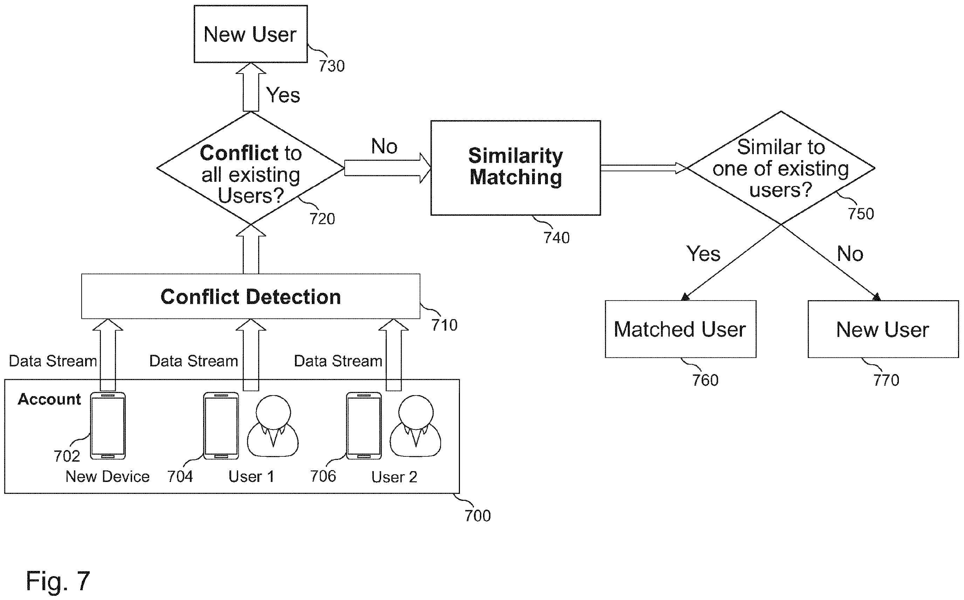

In some cases, a learning approach may be used for device and user alignment. Fig. 7 shows a schematic diagram of a learning approach for device and user alignment. In Fig. 7, three mobile phones 702, 704 and 706 are logged into the same account 700. Mobile phone 704 is aligned with User 1, and mobile phone 706 is aligned with User 2. Mobile phone 702 is a new device. All three devices provide a data stream to a conflict detection block 710, which determines, whether the data stream of the new device 702 has a conflict with the data streams of devices 704 and 706. If a conflict 720 exists with the data streams of both devices (and therefore all existing users), a new user 730 may be determined. If not, similarity matching 740 may be used to determine whether the data stream of the new device is similar 750 to one of the existing users. If not, a new user 770 may be determined. If yes, the new device may be matched 760 to the existing user.

Embodiments may thus provide a device and user alignment algorithm, e.g. to match a mobile device to a user of the two or more users:

IF a new Device is found under Account ID ($AID$), e.g. the digital account identifier, it may be assumed that the device ID is $DID_{new}$.

- IF $DID_{new}$ is the first device for the current Account, a new user may be identified for the current account, a new User ID may be created, for example "$UID_1$", and the ID mapping: $AID + DID_{new} \rightarrow UID_1$ may be updated.
- ELSE, the data associated with $DID_{new}$ may be stored, a conflict between $DID_{new}$ and data of existing devices under the current account may be determined using a detection algorithm (shown below).

    - IF every existing device has a conflict with the new Device, a new user may be identified, and the ID mapping may be updated: $AID + DID_{new} \rightarrow UID_{new}$
    - Else for each compatible device $DID_k$ (mapped user ID as $UID_l$, calculation the data similarity : $sim(DID_k, DID_{new})$, if a similarity exceed threshold, the mapping may be as: $AID + DID_{new} \rightarrow UID_l$. If no similar device is found, a new user may be created as: $AID + DID_{new} \rightarrow UID_{new}$

Embodiments may further provide a conflict detection for device and user alignment. Conflict detection may be the initial step to find out a device that is dissimilar to new device. The basic idea of this conflict detection may be to detect conflicts in movement between devices: if two device are moving at different locations at the same time, it means that there may be different users; if one device is moving, another device steadily stays in one place, it could be a device the user has left it at home or office, it might not be considered as conflict. Accordingly, the conflict detection algorithm may comprise one or more of the following steps:

1. Extract mobility events (i.e. the one or more trips taken with the two or more mobile devices) with detailed information from telemetry data of the mobile devices, the events may include mobility like drive, stay, walk, bike, transportation, flight; detailed information may include a start location and time, and an end location and time. Events, in which a mobile device stays in a place may be excluded.

2. For *Event<sub>i</sub>* of first Device ID, find events from the second Device ID that have overlap in time with *Event<sub>i</sub>*; for overlapped $event_k^*$ calculate a maximum distance between *Event<sub>i</sub>* and $event_k^*$ , if distance is bigger than threshold, two device may be detected as conflict.

3. Repeat step 2 for every event from first device ID, if no conflict found with second device, two device may be deemed compatible (i.e. comprise a similar mobility pattern).

To compare the different mobile devices, a mobility pattern of the mobile devices may be used to determine a similarity between devices. Embodiments provide a similarity measure for the device and user alignment.

For the same user, the mobility pattern should be similar, e.g. similar time to leave and return to home. The similarity may be defined as similarity of a mobility pattern between the first and second input data in the feature domain.

In an example, simple mobility features may be temporal features such as:

- $fea_{0,l,K} = [S_{0,l,1,K} \cdots S_{0,l,24,K}]$, $S_{0,l,i,K}$ means average stay duration for *l* (home/work) in *ith hour, l* $\in$ {0,1}, 0 means home, 1 means work; K $\in$ {0,1}, 0 means the first input data, 1 means the second input data.
- $fea_{1,l,K} = [S_{1,l,1,K} \cdots S_{1,l,24,K}]$, $S_{1,l,i,K}$ means frequency user leaves *l* (home/work) in *ith hour*
- $fea_{2,l,K} = [S_{2,l,1,K} \cdots S_{l,24,K}]$, $S_{2,l,i,K}$ means frequency user returns *l* (home/work) in *ith hour*
- $fea_{3,l,K} = [S_{3,1,K} \cdots S_{3,24,K}]$, $S_{3,i,K}$ means average vehicle travel duration for *l* in *ith hour*
- $fea_{4,l,K} = [S_{4,1,K} \cdots S_{4,24,K}]$, $S_{4,i,K}$ means average stay duration for *l* in *ith hour*

In the above example, home/work was identified using first input data, if no home or work is found, the top learnt destinations may be used.

This is merely a simple feature set of an exemplary implementation. The feature set may be extended to alternative features.

One way to get similarity score is:

$$ sim = \sum_{g=0}^{2} \sum_{l=0}^{1} \sum_{j=1}^{24} c_{g,l,j} * S_{g,l,j,0} * S_{g,l,j,1} + \sum_{g=3}^{4} \sum_{j=1}^{24} d_{g,j} * S_{g,j,0} * S_{g,j,1} $$

In this case, a sum over the first three features $fea_{0,l,K}$ - $fea_{2,l,K}$ is calculated, for home and work, for each hour of the day, using the weighting factor $c_{g,l,j}$ and the respective values of the features of the two mobile devices to be compared ($S_{g,l,j,0}$ and $S_{g,l,j,1}$), and a sum is calculated over the features 3 and 4, for each hour of the day, using the weighting factor $d_{g,j}$ and the respective values of the features of the two mobile devices to be compared ($S_{g,j,0}$ and $S_{g,j,1}$). There are several methods for defining the similarity function, for example using neural networks. The weighting parameters $c_{g,l,j}$, $d_{g,j}$ may be trained from existing data.

For example, a learning algorithm may be used to improve or optimize the weighting parameters. The basic idea may be to split the data from the same user into two parts, optimize the parameter so that the similarity between data from the same user is bigger than similarity between data from a different user. The existing users may be split into a training and verification dataset.

It may be assumed that there are *N* training users, data of user *u* may be split as: $D_{u,z}$ $u \in$ {1 $\cdots$ N}; z $\in$ {0,1}, 0 means the first part of data, 1 means the second part, the target is $sim(D_{u,0}, D_{u,1}) > sim(D_{u,0}, D_{v,1})$ for $u \neq v$

The target function $\Theta$, as defined below, may be optimized or minimized.

$$ \Theta = \sum_{u=1}^{N} \sum_{v=1, v \neq u}^{N} \left\{ f\left( sim(D_{u,0}, D_{v,1}) - sim(D_{u,0}, D_{u,1}) \right) \right\} $$
$$ + \frac{1}{2} \sum_{g} \sum_{l} \sum_{j} c_{g,l,j}^{2} + \frac{1}{2} \sum_{g} \sum_{j} d_{g,j}^{2} $$

Gradient descent or its variant may be used to optimize / improve the weight parameter iteratively:

$$c_{g,I,j}^{new} = c_{g,I,j}^{old} - \gamma \frac{\partial \Theta}{\partial c_{g,I,j}}$$

$$d_{g,j}^{new} = d_{g,j}^{old} - \gamma \frac{\partial \Theta}{\partial d_{g,j}}$$

$f(x)$ may be a function to balance the weight of $x$ for improved performance, it may be set to *tanh*. The second part of $\Theta$ may provide parameter regularization to prevent overfitting. Threshold $Thre_{sim}$ may be estimated to improve or optimize the F1 score for data verification.

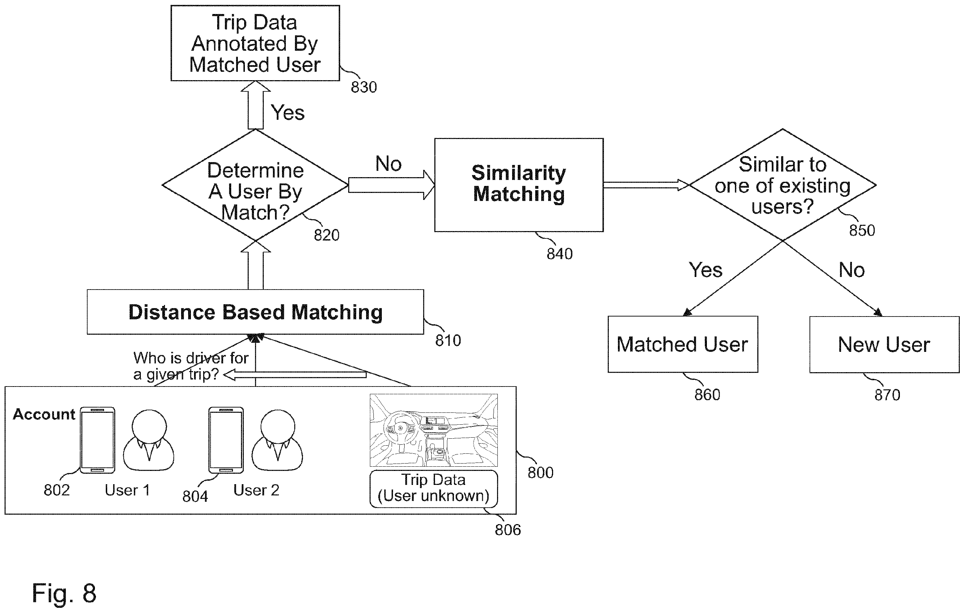

Fig. 8 shows a schematic diagram of an alignment of trip data to a user. In Fig. 8, the question is: Who is the driver or passenger for a given trip?. In account 800, two users, User 1 802 and User 2 804, and one vehicle 806 are registered, the vehicle providing trip data of an unknown user. Distance-based matching 810 is used to match the trip data to the users. If a user is determined 820 as match, the trip data is annotated 830 to the matched user. If not, similarity matching 840 may be performed. If the trip data is similar 850 to one of existing users, it may be matched 860 to said user, if not, it may be rejected 870.

In a learning approach for aligning the trip data to a user, a User and Vehicle data alignment algorithm is provided.

It may be assumed that a vehicle (VIN) is shared by multiple users ($user_1 \cdots user_N$), for unlabeled trip {$T_{start} \cdots T_{end}$}, $T_i$ = (*lat, lon, time* ...), the annotation step may be:

1. Identify user based on distance of user data and trip,
Candidate user list may be set to empty. For each active user, the phone data may be collected, the phone data may include geofence, cell-id inferred GPS data and time stamp. Using these data, the mobility events may be extracted (i.e. the trips taken by the mobile devices may be extracted). For each event of a user, if the time of events overlaps with a trip time, a maximal geo-distance between the trip and event may be calculated and set as distance between event and trip. If all events of a user either have no-overlap with the trip in time or distance between trip and event is smaller than threshold, the user may be added into a candidate list. If only one candidate user in the list, the trip may be annotated to that user.

2. If the step 1 could not find the result, a similarity between user data and trip may be used to find user annotation.

In this case, similarity means a similarity between user's global pattern (i.e. the mobility pattern of the user) and the trip. A suitable algorithm is described below. The data collected by the phone may be sparse, it may be possible there is no data collected for the user who drives the car, and step 1 couldn't find any user. If multiple user candidates were found in step 1, similarity detection may also be used to find the proper user. In this case, a similarity score between every user and trip may be calculated, and the trip may be assigned (labeled) to the user who has the highest similarity score.

Embodiments may provide a user and vehicle alignment algorithm to align a user and a trip using a similarity measure. As in the previous algorithm, events may be extracted from user data, a start location of a trip may be labelled as $l_{start}$, an end location as $l_{end}$, the weekday is *weekday,* start and end time are $time_{start}, time_{end}$. An exemplary feature set for user $i$ may be defined as:

- $fea_{0,i}$ = [$t_{0,i,0}$, $t_{0,i,1}$, $t_{0,i,2}$, $t_{0,i,3}$]: $t_{0,i,0}$, means average time per day a user stays near $l_{start}$, $t_{0,i,1}$ means average time per day a user stays near $l_{end}$; $t_{0,i,2}$, average time per weekday a user stays near $l_{start}$, $t_{0,i,3}$, means average time per weekday a user stays near $l_{end}$. For example if the trip happened in Tuesday, $t_{0,i,2}$ means average duration user stays in location near $l_{end}$ in Tuesday.
- $fea_{1,i}$ = [$t_{1,i,0}$, $t_{1,i,1}$, $t_{1,i,2}$, $t_{1,i,3}$]: where $t_{1,i,0}$ means average number of trips from $l_{start}$ to $l_{end}$ for user $i$ in one day, $t_{1,i,0}$ means average number of trips from $l_{start}$ to $l_{end}$ for user $i$ in *weekday*; $t_{1,i,2}$ means average number of trips from $l_{start}$ to $l_{end}$ and start time is close to $time_{start}$, end time close to $time_{end}$ for user $i$ in one day, $t_{1,i,3}$ means average number of trips from $l_{start}$ to $l_{end}$ and start time is close to $time_{start}$, end time close to $time_{end}$ for user $i$ in *weekday.*
- $fea_{2,i}$ = [$t_{2,i,0}$, $t_{2,i,1}$, $t_{2,i,2}$, $t_{2,i,3}$]: where $t_{2,i,0}$ means average time of user $i$ driving in one day, $t_{2,i,1}$ means average time of user $i$ driving in *weekday,* $t_{2,i,2}$ means average time of user $i$ driving between and $time_{start}$ and $time_{end}$ in one day, $t_{2,i,3}$ means average time of user $i$ driving between and $time_{start}$ and $time_{end}$ in *weekday.*

There are many other features could be defined, this is an exemplary implementation.

The similarity function may be defined as:

$$sim(trip, user_i) = \sum_{t=0}^{2} \sum_{j=0}^{4} w_{t,j} * t_{t,i,j}$$

The similarity function between a trip and $user_i$ may be calculated for features 0 to 2 and the four components of each feature based on weighting factor $w_{t,j}$ and the value for the component of the respective feature. There are many other ways to define the similarity function, for example using neural networks.

Again, a learning algorithm may be used to optimize the weight parameter. The training method may be similar to the algorithm specified above before. The idea may be to randomly remove trips from a user's data, optimize weight parameter so that similarity between trip among the same user is higher than from other user.

1. For user $i$, randomly pick up M trips, suppose trips are $tr_{i,l}$ $l$ = 1 $\cdots$ M, using the remaining data to extract events and calculating features for each trip.

2. Training target may be to reduce or minimize the following objective function:

$$\Theta = \sum_{u=1}^{U} \sum_{l=1}^{M} \sum_{v=1, v\neq u}^{U} f(sim\left(tr_{u,l}, v\right) - sim\left(tr_{u,l}, u\right)) + \sum_{t} \sum_{j} w_{t,j}{}^2$$

There are several other ways to define $\Theta$. Gradient descent or its variation may be used to optimize weight parameters.

Embodiments may further provide an approach for backing off in the alignment. Alignment may not be possible all the time, and embodiments may thus provide a backoff approach to address it. For example, in some cases, the system may collect the data from one stream only, e.g. collect vehicle data only. An account might not be created or a device associated with the account, though one user or several users may drive the vehicle, leading to the mixed data from one or several users.

In a backoff approach, the system may align the data for a given vehicle ID, though it may be driven by several users. Metadata may label the scenario indicating it is vehicle ID based. Depending on the use case, a feature can decide how to use the patterns inferred from this scenario. Once users have created the account, and data is able to be aligned as user's data, the data created by the backoff approach can be either removed, merged or used as backoff. For merged patterns with personal data, an incremental approach may be chosen to adapt the model with newly generated personal data. For those patterns previously learnt from other users, it may eventually be decayed, otherwise the patterns may be enforced by personal data.

At least some embodiments may provide an enforcement of privacy. Embodiments may be able to manage the data privacy or sensitivity in a centralized manner. Each stream may have a limited ID coverage. For example, the vehicle data stream may have all the data coming from vehicle the, but no information about user and user's device. A vehicle related service might only be able to subscribe to this data stream only. If it needs data anonymization, it might anonymize only the VIN. The annotation stream may be the primary key to align the data that is also centrally managed.

At least some embodiments provide a dynamic account graph solution for user-centric data alignment in multi-stream data collection. An annotation stream may provide a precise ID alignment, and may require a suitable design and implementation. A user name may glue personal devices together. Embodiments may further provide inference, e.g. user verification by conflict detection and behavior similarity measure. Both approaches can be combined.

Embodiments may provide a multi-stream data collection by type of data source, enabled by an account graph. Compared with feature based data collection, such a multi-stream data collection may be more cost-efficient and comprehensive, as it includes less data duplication, but more coverage and a holistic approach since data can be managed stream by stream, and more focused per stream. Compared with having all data into one stream, it may be easier to manage, provide less dependency, and provide a decoupled module design. It may also be extensible to create new type of devices without impacting a software change in an existing source of devices. Embodiments may provide data alignment that is efficient, high quality, low cost, and that has the flexibility to integrate existing data and make it more valuable. Embodiments may further provide data integrity through a holistic data asset by user centric account graph that is suitable for aligning and consolidating data, to form a truly big data asset that is suitable for bringing consumer and business value by machine learning and analytics insight. The system may be able to model among user, device, vehicle and to proactively push the message to right person and device. Embodiments may further facilitate privacy enforcement and/or privacy information management.

Embodiments may be used for automotive purposes, e.g. to support machine-learning in automotive purposes over big data, e.g. in order to create an intelligent personal assistant for a car.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. The invention is defined by the claims.

## Claims

1. A computer-implemented method for aligning vehicular data of one or more vehicles with mobile device data of two or more mobile devices, the method comprising:

   obtaining (110) the vehicular data of one or more vehicles, the one or more vehicles having a vehicle identifier, the one or more vehicles being associated with a single digital account identifier;
   obtaining (120) the mobile device data of two or more mobile devices being associated with the digital account identifier, the digital account identifier being associated with two or more users using the same digital account identifier, each of the mobile devices being associated with one of the two or more users;

identifying (130) one or more trips taken with the one or more vehicles based on the vehicular data and one or more trips taken with the two or more mobile devices based on the mobile device data;

assigning (140) vehicular data of the one or more trips taken with the one or more vehicles to at least one of the two or more users, wherein vehicular data of a trip is assigned to at least one of the two or more users based on a match between the trip taken with the one or more vehicles and a mobility pat-tern of one of the two or more users;

assigning (140) the mobile device data to at least one of the two or more users based on the association between the two or more mobile devices and the two or more users;

Storing (150) the vehicular data and the mobile device data based on the assignment of the vehicular data and of the mobile device data to at least one of the two or more users.

2. The method according to claim 1, wherein the vehicular data of a trip is assigned to at least one of the two or more users further based on at least one of a) a match between the trip taken with the one or more vehicles and a trip taken with the two or more mobile devices and b) a mismatch between the trip taken with the one or more vehicles and a trip taken with the two or more mobile devices.

3. The method according to claim 1, wherein the vehicular data originates from a plurality of different vehicular data sources, the vehicular data at least partially having been collected with incomplete identifier information, the method comprising merging (115) the vehicular data from the plurality of data sources based on a vehicle identifier of the respective vehicle.

4. The method according to claim 3, wherein the vehicular data is retroactively merged based on the vehicle identifier of the respective vehicle.

5. The method according to claim 1, wherein each mobility pattern is based on a plurality of features related to the mobility pattern, wherein the plurality of features comprises one or more elements of the group of an average staying duration at a location per day, an average staying duration at a home location per day, an average staying duration at a work location per day, average staying duration at a location in a given hour, an average staying duration at a home location in a given hour, an average staying duration at a work location in a given hour, a frequency at which a user leaves or returns to a location in a given hour, an average vehicle travel duration during a given hour, an average staying duration in a given hour, an average number of trips per day or workday or in a given timeframe of a day or workday, an average number of trips per day or workday or in a given timeframe of a day or workday between a pre-defined starting location and a pre-defined destination, an average staying time at a starting location of a trip, and an average staying time at a destination of a trip.

6. The method according to one of the claims 1 to 5, wherein the match or mismatch between a trip taken with one of the one or more vehicles and a trip taken with a mobile device, or between a trip taken with one of the one or more vehicles and a mobility pattern of one of the two or more users is computed based on at least one of a starting time, an ending time, a duration, a starting position, an ending position, and a route of the respective trips or mobility patterns.

7. The method according to one of the claims 1 to 6, wherein the match between the trip taken with the one or more vehicles and the mobility pattern of one of the two or more users is computed based on a similarity between the trip taken with the one or more vehicles and the mobility pattern of one of the two or more users.

8. The method according to one of the claims 6 or 7, wherein the similarity is computed based on a similarity measure, the method comprising improving one or more weighting factors for the similarity measure using a learning algorithm based on one or more mobility patterns of the two or more users and/or the one or more trips taken with the one or more vehicles, the one or more weighting factors being improved in a supervised manner.

9. The method according to one of the claims 1 to 8, comprising detecting (145) a conflict between the one or more trips taken with the one or more vehicles, the one or more trips taken with the two or more mobile devices, and/or a mobility pattern of the two or more users, so that a new user is added to the two or more users or an association between a user and a mobile device is changed if a conflict is detected.

10. The method according to one of the claims 1 to 9, wherein a user is associated with a mobile device based on a user-based confirmation of the association if the user of a mobile device is changed.

11. The method according to one of the claims 1 to 10, wherein the vehicular data is assigned to the at least one user using a dynamic user-centric account graph, the dynamic user-centric account graph comprising the two or more users, wherein each of the two or more users is linked with one or more mobile devices and with one or more vehicles within the dynamic user-centric account graph.

12. The method according to one of the claims 1 to 11, comprising determining (125) an association between a user and a mobile device based on a similarity measure between a mobility pattern of the mobile device and a mobility pattern of the user.

13. The method according to one of the claims 1 to 12, further comprising training (160) a machine-learning model to create a user-specific machine-learning model using the combined vehicular and mobile device data being associated with the respective user.

14. A computer program having a program code for performing the method according to one of the claims 1 to 13, when the computer program is executed on a computer, a processor, or a programmable hardware component.

15. An apparatus (10) for aligning vehicular data of one or more vehicles with mobile device data of two or more mobile devices, the apparatus comprising:

an interface (12);
a storage module (14); and
a processing module (16) configured to:

obtain the vehicular data of one or more vehicles, the one or more vehicles having a vehicle identifier, the one or more vehicles being associated with a single digital account identifier, via the interface,
obtain mobile device data of two or more mobile devices being associated with the digital account identifier, the digital account identifier being associated with two or more users using the same digital account identifier, each of the mobile devices being associated with one of the two or more users, via the interface;
identify one or more trips taken with the one or more vehicles based on the vehicular data and one or more trips taken with the two or more mobile devices based on the mobile device data,
assign vehicular data of the one or more trips taken with the one or more vehicles to at least one of the two or more users, wherein vehicular data of a trip is assigned to at least one of the two or more users based on a match between the trip taken with the one or more vehicles and a mobility pat-tern of one of the two or more users,
assign the mobile device data to at least one of the two or more users based on the association between the two or more mobile devices and the two or more users, and Store the vehicular data and the mobile device data in the storage module based on the assignment of the vehicular data and of the mobile device data to at least one of the two or more users.

**Patentansprüche**

1. Computerimplementiertes Verfahren zum Abgleichen von Fahrzeugdaten von einem oder mehreren Fahrzeugen mit Mobilvorrichtungsdaten von zwei oder mehr Mobilvorrichtungen, wobei das Verfahren Folgendes umfasst:

Erhalten (110) der Fahrzeugdaten von einem oder mehreren Fahrzeugen, wobei das eine oder die mehreren Fahrzeuge eine Fahrzeugkennung aufweisen, wobei dem einen oder den mehreren Fahrzeugen eine einzelne digitale Kontokennung zugeordnet ist;
Erhalten (120) der Mobilvorrichtungsdaten von zwei oder mehr Mobilvorrichtungen, denen die digitale Kontokennung zugeordnet ist, wobei die digitale Kontokennung zwei oder mehr Anwendern, die dieselbe digitale Kontokennung verwenden, zugeordnet ist, wobei jede der Mobilvorrichtungen einem der zwei oder mehr Anwender zugeordnet ist;
Identifizieren (130) einer oder mehrerer Fahrten, die mit dem einen oder den mehreren Fahrzeugen durchgeführt werden, auf der Grundlage der Fahrzeugdaten und einer oder mehrerer Fahrten, die mit den zwei oder mehr Mobilvorrichtungen durchgeführt werden, auf der Grundlage der Mobilvorrichtungsdaten;
Zuweisen (140) von Fahrzeugdaten der einen oder mehreren Fahrten, die mit dem einen oder den mehreren Fahrzeugen durchgeführt werden, zu wenigstens einem der zwei oder mehr Anwender, wobei die Fahrzeugdaten einer Fahrt wenigstens einem der zwei oder mehr Anwender auf der Grundlage eines Zusammenpassens zwischen der Fahrt, die mit dem einen oder den mehreren Fahrzeugen durchgeführt wird, und einem Mobilitätsmuster eines der zwei oder mehr Anwender zugewiesen werden;

Zuweisen (140) der Mobilvorrichtungsdaten zu wenigstens einem der zwei oder mehr Anwender auf der Grundlage der Zuordnung zwischen den zwei oder mehr Mobilvorrichtungen und den zwei oder mehr Anwendern;

Speichern (150) der Fahrzeugdaten und der Mobilvorrichtungsdaten auf der Grundlage der Zuweisung der Fahrzeugdaten und der Mobilvorrichtungsdaten zu wenigstens einem der zwei oder mehr Anwender.

2. Verfahren nach Anspruch 1, wobei die Fahrzeugdaten einer Fahrt wenigstens einem der zwei oder mehr Anwender ferner auf der Grundlage a) eines Zusammenpassens zwischen der mit dem einen oder den mehreren Fahrzeugen durchgeführten Fahrt und einer mit den zwei oder mehr Mobilvorrichtungen durchgeführten Fahrt und/oder b) eines Nichtzusammenpassens zwischen der mit dem einen oder den mehreren Fahrzeugen durchgeführten Fahrt und einer mit den zwei oder mehr Mobilvorrichtungen durchgeführten Fahrt zugewiesen werden.

3. Verfahren nach Anspruch 1, wobei die Fahrzeugdaten von mehreren verschiedenen Fahrzeugdatenquellen ausgehen, wobei die Fahrzeugdaten wenigstens teilweise mit unvollständigen Kennungsinformationen erhoben worden sind, wobei das Verfahren das Vereinigen (115) der Fahrzeugdaten von den mehreren Datenquellen auf der Grundlage einer Fahrzeugkennung des jeweiligen Fahrzeugs umfasst.

4. Verfahren nach Anspruch 3, wobei die Fahrzeugdaten auf der Grundlage der Fahrzeugkennung des jeweiligen Fahrzeugs rückwirkend vereinigt werden.

5. Verfahren nach Anspruch 1, wobei jedes Mobilitätsmuster auf mehreren Merkmalen in Bezug auf das Mobilitätsmuster beruht, wobei die mehreren Merkmale ein oder mehrere Elemente der Gruppe einer durchschnittlichen Aufenthaltsdauer an einem Ort pro Tag, einer durchschnittlichen Aufenthaltsdauer an einem Wohnort pro Tag, einer durchschnittlichen Aufenthaltsdauer an einem Arbeitsort pro Tag, einer durchschnittlichen Aufenthaltsdauer an einem Ort in einer gegebenen Stunde, einer durchschnittlichen Aufenthaltsdauer an einem Wohnort in einer gegebenen Stunde, einer durchschnittlichen Aufenthaltsdauer an einem Arbeitsort in einer gegebenen Stunde, einer Häufigkeit, mit der ein Anwender einen Ort in einer gegebenen Stunde verlässt oder zu ihm zurückkehrt, einer durchschnittlichen Fahrzeugfahrdauer während einer gegebenen Stunde, einer durchschnittlichen Aufenthaltsdauer in einer gegebenen Stunde, einer durchschnittlichen Anzahl der Fahrten pro Tag oder Arbeitstag oder in einem gegebenen Zeitrahmen eines Tags oder Arbeitstags, einer durchschnittlichen Anzahl der Fahrten pro Tag oder Arbeitstag oder in einem gegebenen Zeitrahmen eines Tags oder Arbeitstags zwischen einem im Voraus definierten Anfangsort und einem im Voraus definierten Ziel, einer durchschnittlichen Aufenthaltsdauer an einem Anfangsort einer Fahrt und einer durchschnittlichen Aufenthaltsdauer an einem Ziel einer Fahrt umfassen.

6. Verfahren nach einem der Ansprüche 1 bis 5, wobei das Zusammenpassen oder Nichtzusammenpassen zwischen einer Fahrt, die mit einem der einen oder mehreren Fahrzeuge durchgeführt wird, und einer Fahrt, die mit einer Mobilvorrichtung durchgeführt wird, oder zwischen einer Fahrt, die mit einem der einen oder mehreren Fahrzeuge durchgeführt wird, und einem Mobilitätsmuster des einen der zwei oder mehr Anwender auf der Grundlage einer Anfangszeit und/oder einer Endzeit und/oder einer Dauer und/oder einer Anfangsposition und/oder einer Endposition und/oder einer Route der jeweiligen Fahrten oder Mobilitätsmuster berechnet wird.

7. Verfahren nach einem der Ansprüche 1 bis 6, wobei das Zusammenpassen zwischen der Fahrt, die mit dem einen oder den mehreren Fahrzeugen durchgeführt wird, und dem Mobilitätsmuster des einen der zwei oder mehr Anwender auf der Grundlage einer Ähnlichkeit zwischen der Fahrt, die mit dem einen oder den mehreren Fahrzeugen durchgeführt wird, und dem Mobilitätsmuster eines der zwei oder mehr Anwender berechnet wird.

8. Verfahren nach einem der Ansprüche 6 oder 7, wobei die Ähnlichkeit auf der Grundlage eines Ähnlichkeitsmaßes berechnet wird, wobei das Verfahren das Verbessern eines oder mehrerer Gewichtungsfaktoren für das Ähnlichkeitsmaß unter Verwendung eines Lernalgorithmus umfasst, der auf einem oder mehreren Mobilitätsmustern der zwei oder mehr Anwender und/oder auf der einen oder den mehreren Fahrten, die mit dem einen oder den mehreren Fahrzeugen durchgeführt werden, beruht, wobei der eine oder die mehreren Gewichtungsfaktoren auf überwachte Weise verbessert werden.

9. Verfahren nach einem der Ansprüche 1 bis 8, das das Detektieren (145) eines Konflikts zwischen der einen oder den mehreren Fahrten, die mit dem einen oder den mehreren Fahrzeugen durchgeführt werden, der einen oder den mehreren Fahrten, die mit den zwei oder mehr Mobilvorrichtungen durchgeführt werden, und/oder einem Mobilitätsmuster der zwei oder mehr Anwender umfasst, sodass zu den zwei oder mehr Anwendern ein neuer Anwender hinzugefügt wird oder eine Zuordnung zwischen einem Anwender und einer Mobilvorrichtung geändert wird, falls ein Konflikt detektiert wird.

10. Verfahren nach einem der Ansprüche 1 bis 9, wobei ein Anwender einer Mobilvorrichtung auf der Grundlage einer anwenderbasierten Bestätigung der Zuordnung zugeordnet wird, falls der Anwender einer Mobilvorrichtung geändert wird.

11. Verfahren nach einem der Ansprüche 1 bis 10, wobei die Fahrzeugdaten dem wenigstens einen Anwender unter Verwendung eines dynamischen anwenderzentrierten Kontographen zugewiesen werden, wobei der dynamische anwenderzentrierte Kontograph die zwei oder mehr Anwender umfasst, wobei jeder der zwei oder mehr Anwender innerhalb des dynamischen anwenderzentrierten Kontographen mit einer oder mehreren Mobilvorrichtungen und mit einem oder mehreren Fahrzeugen verknüpft ist.

12. Verfahren nach einem der Ansprüche 1 bis 11, das das Bestimmen (125) einer Zuordnung zwischen einem Anwender und einer Mobilvorrichtung auf der Grundlage eines Ähnlichkeitsmaßes zwischen einem Mobilitätsmuster der Mobilvorrichtung und einem Mobilitätsmuster des Anwenders umfasst.

13. Verfahren nach einem der Ansprüche 1 bis 12, das ferner das Training (160) eines Modells maschinellen Lernens zum Erzeugen eines anwenderspezifischen Modells maschinellen Lernens unter Verwendung der kombinierten Fahrzeug- und Mobilvorrichtungsdaten, die dem jeweiligen Anwender zugeordnet sind, umfasst.

14. Computerprogramm mit einem Programmcode zum Ausführen des Verfahrens nach einem der Ansprüche 1 bis 13, wenn das Computerprogramm in einem Computer, in einem Prozessor oder in einer programmierbaren Hardwarekomponente ausgeführt wird.

15. Vorrichtung (10) zum Abgleichen von Fahrzeugdaten von einem oder mehreren Fahrzeugen mit Mobilvorrichtungsdaten von zwei oder mehr Mobilvorrichtungen, wobei die Vorrichtung Folgendes umfasst:

eine Schnittstelle (12);
ein Speichermodul (14); und
ein Verarbeitungsmodul (16), das konfiguriert ist zum:

Erhalten der Fahrzeugdaten von einem oder mehreren Fahrzeugen, wobei das eine oder die mehreren Fahrzeuge eine Fahrzeugkennung aufweisen, wobei dem einen oder den mehreren Fahrzeugen eine einzelne digitale Kontokennung zugeordnet ist, über die Schnittstelle;
Erhalten der Mobilvorrichtungsdaten von zwei oder mehr Mobilvorrichtungen, denen die digitale Kontokennung zugeordnet ist, wobei die digitale Kontokennung zwei oder mehr Anwendern, die dieselbe digitale Kontokennung verwenden, zugeordnet ist, wobei jede der Mobilvorrichtungen einem der zwei oder mehr Anwender zugeordnet ist, über die Schnittstelle;
Identifizieren einer oder mehrerer Fahrten, die mit dem einen oder den mehreren Fahrzeugen durchgeführt werden, auf der Grundlage der Fahrzeugdaten und einer oder mehrerer Fahrten, die mit den zwei oder mehr Mobilvorrichtungen durchgeführt werden, auf der Grundlage der Mobilvorrichtungsdaten,
Zuweisen von Fahrzeugdaten der einen oder mehreren Fahrten, die mit dem einen oder den mehreren Fahrzeugen durchgeführt werden, zu wenigstens einem der zwei oder mehr Anwender, wobei die Fahrzeugdaten einer Fahrt wenigstens einem der zwei oder mehr Anwender auf der Grundlage eines Zusammenpassens zwischen der Fahrt, die mit dem einen oder den mehreren Fahrzeugen durchgeführt wird, und einem Mobilitätsmuster eines der zwei oder mehr Anwender zugewiesen werden,
Zuweisen der Mobilvorrichtungsdaten zu wenigstens einem der zwei oder mehr Anwender auf der Grundlage der Zuordnung zwischen den zwei oder mehr Mobilvorrichtungen und den zwei oder mehr Anwendern, und
Speichern der Fahrzeugdaten und der Mobilvorrichtungsdaten in dem Speichermodul auf der Grundlage der Zuweisung der Fahrzeugdaten und der Mobilvorrichtungsdaten zu wenigstens einem der zwei oder mehr Anwender.

**Revendications**

1. Procédé mis en œuvre par ordinateur pour aligner des données de véhicules d'un ou plusieurs véhicules avec des données de dispositifs mobiles de deux, ou davantage, dispositifs mobiles, le procédé comprenant les étapes suivantes :

obtenir (110) les données de véhicule d'un ou plusieurs véhicules, les un ou plusieurs véhicules ayant un identifiant de véhicule, les un ou plusieurs véhicules étant associés à un identifiant de compte numérique unique ;

obtenir (120) les données de dispositif mobile de deux, ou davantage, dispositifs mobiles associés à l'identifiant de compte numérique, l'identifiant de compte numérique étant associé à deux, ou davantage, utilisateurs utilisant le même identifiant de compte numérique, chacun des dispositifs mobiles étant associé à l'un des deux, ou davantage, utilisateurs ;

identifier (130) un ou plusieurs trajets effectués avec un ou plusieurs véhicules sur la base des données de véhicule et un ou plusieurs trajets effectués avec les deux, ou davantage, dispositifs mobiles sur la base des données de dispositif mobile ;

affecter (140) des données de véhicule des un ou plusieurs trajets effectués avec les un ou plusieurs véhicules à au moins un des deux, ou davantage, utilisateurs, où les données de véhicule d'un trajet sont affectées à au moins un des deux, ou davantage, utilisateurs sur la base d'une correspondance entre le trajet effectué avec les un ou plusieurs véhicules et un schéma de mobilité d'un des deux, ou davantage, utilisateurs ;

affecter (140) les données de dispositif mobile à au moins un des deux, ou davantage, utilisateurs sur la base de l'association entre les deux, ou davantage, dispositifs mobiles et les deux, ou davantage, utilisateurs ;

stocker (150) les données du véhicule et les données du dispositif mobile sur la base de l'affectation des données du véhicule et des données du dispositif mobile à au moins un des deux, ou davantage, utilisateurs.

2. Procédé selon la revendication 1, dans lequel les données de véhicule d'un trajet sont affectées à au moins l'un des deux, ou davantage, utilisateurs en se basant en outre sur au moins l'un des éléments suivants : a) une correspondance entre le trajet effectué avec un ou plusieurs véhicules et un trajet effectué avec les deux, ou davantage, dispositifs mobiles et b) une noncorrespondance entre le trajet effectué avec un ou plusieurs véhicules et un trajet effectué avec les deux, ou davantage, dispositifs mobiles.

3. Procédé selon la revendication 1, dans lequel les données de véhicule proviennent d'une pluralité de sources de données de véhicule différentes, les données de véhicule ayant au moins partiellement été collectées avec des informations d'identifiant incomplètes, le procédé comprenant la fusion (115) des données de véhicule provenant de la pluralité de sources de données sur la base d'un identifiant de véhicule du véhicule respectif.

4. Procédé selon la revendication 3, dans lequel les données de véhicule sont fusionnées rétroactivement sur la base de l'identifiant de véhicule du véhicule respectif.

5. Procédé selon la revendication 1, dans lequel chaque schéma de mobilité est basé sur une pluralité de caractéristiques liées au schéma de mobilité, où la pluralité de caractéristiques comprend un ou plusieurs éléments du groupe d'une durée de séjour moyenne à un emplacement par jour, une durée de séjour moyenne à un emplacement de domicile par jour, une durée de séjour moyenne à un emplacement de travail par jour, une durée de séjour moyenne à un emplacement dans une heure donnée, une durée de séjour moyenne à un emplacement de domicile dans une heure donnée, une durée de séjour moyenne à un emplacement de travail dans une heure donnée, une fréquence à laquelle un utilisateur quitte ou retourne à un emplacement dans une heure donnée, une durée moyenne de déplacement en véhicule pendant une heure donnée, une durée moyenne de séjour dans une heure donnée, un nombre moyen de trajets par jour ou par jour ouvrable ou dans une période donnée d'un jour ou d'un jour ouvrable, un nombre moyen de trajets par jour ou par jour ouvrable ou dans une période donnée d'un jour ou d'un jour ouvrable entre un emplacement de départ prédéfini et une destination prédéfinie, une durée moyenne de séjour à un emplacement de départ d'un trajet, et une durée moyenne de séjour à une destination d'un trajet.

6. Procédé selon l'une des revendications 1 à 5, dans lequel la correspondance ou la non-correspondance entre un trajet effectué avec l'un des un ou plusieurs véhicules et un trajet effectué avec un dispositif mobile, ou entre un trajet effectué avec l'un des un ou plusieurs véhicules et un schéma de mobilité de l'un des deux, ou davantage, utilisateurs est calculée sur la base d'au moins l'un parmi un élément parmi une heure de début, une heure de fin, une durée, une position de début, une position de fin et un itinéraire des trajets ou des schémas de mobilité respectifs.

7. Procédé selon l'une des revendications 1 à 6, dans lequel la correspondance entre le trajet effectué avec les un ou plusieurs véhicules et le schéma de mobilité de l'un des deux, ou davantage, utilisateurs est calculée sur la base d'une similarité entre le trajet effectué avec les un ou plusieurs véhicules et le schéma de mobilité de l'un des deux, ou davantage, utilisateurs.

**8.** Procédé selon l'une des revendications 6 ou 7, dans lequel la similarité est calculée sur la base d'une mesure de similarité, le procédé comprenant l'amélioration d'un ou plusieurs facteurs de pondération pour la mesure de similarité en utilisant un algorithme d'apprentissage basé sur un ou plusieurs schémas de mobilité des deux, ou davantage, utilisateurs et/ou les un ou plusieurs trajets effectués avec les un ou plusieurs véhicules, les un ou plusieurs facteurs de pondération étant améliorés de manière supervisée.

**9.** Procédé selon l'une des revendications 1 à 8, comprenant la détection (145) d'un conflit entre les un ou plusieurs trajets effectués avec les un ou plusieurs véhicules, les un ou plusieurs trajets effectués avec les deux, ou davantage, dispositifs mobiles, et/ou un schéma de mobilité des deux, ou davantage, utilisateurs, de sorte qu'un nouvel utilisateur est ajouté aux deux, ou davantage, utilisateurs ou qu'une association entre un utilisateur et un dispositif mobile est modifiée si un conflit est détecté.

**10.** Procédé selon l'une des revendications 1 à 9, dans lequel un utilisateur est associé à un dispositif mobile sur la base d'une confirmation par l'utilisateur de l'association si l'utilisateur d'un dispositif mobile est modifié.

**11.** Procédé selon l'une des revendications 1 à 10, dans lequel les données de véhicule sont affectées à l'au moins un utilisateur en utilisant un graphe de compte dynamique centré sur l'utilisateur, le graphe de compte dynamique centré sur l'utilisateur comprenant les deux, ou davantage, utilisateurs, où chacun des deux, ou davantage, utilisateurs est lié à un ou plusieurs dispositifs mobiles et à un ou plusieurs véhicules dans le graphe de compte dynamique centré sur l'utilisateur.

**12.** Procédé selon l'une des revendications 1 à 11, comprenant la détermination (125) d'une association entre un utilisateur et un dispositif mobile sur la base d'une mesure de similarité entre un schéma de mobilité du dispositif mobile et un schéma de mobilité de l'utilisateur.

**13.** Procédé selon l'une des revendications 1 à 12, comprenant en outre l'entraînement (160) d'un schéma d'apprentissage machine pour créer un modèle d'apprentissage machine spécifique à l'utilisateur en utilisant les données combinées de véhicule et de dispositif mobile étant associées à l'utilisateur respectif.

**14.** Programme informatique ayant un code de programme pour exécuter le procédé selon l'une des revendications 1 à 13, lorsque le programme informatique est exécuté sur un ordinateur, un processeur ou un composant matériel programmable.

**15.** Appareil (10) pour aligner des données de véhicule d'un ou plusieurs véhicules avec des données de dispositif mobile de deux, ou davantage, dispositifs mobiles, l'appareil comprenant :

une interface (12) ;
un module de stockage (14) ; et
un module de traitement (16) configuré pour :

obtenir les données de véhicule d'un ou plusieurs véhicules, les un ou plusieurs véhicules ayant un identifiant de véhicule, les un ou plusieurs véhicules étant associés à un identifiant de compte numérique unique, par l'intermédiaire de l'interface,
obtenir des données de dispositif mobile de deux, ou davantage, dispositifs mobiles associés à l'identifiant de compte numérique, l'identifiant de compte numérique étant associé à deux, ou davantage, utilisateurs utilisant le même identifiant de compte numérique, chacun des dispositifs mobiles étant associé à l'un des deux, ou davantage, utilisateurs, par l'intermédiaire de l'interface ;
identifier un ou plusieurs trajets effectués avec un ou plusieurs véhicules sur la base des données de véhicule et un ou plusieurs trajets effectués avec les deux, ou davantage, dispositifs mobiles sur la base des données de dispositif mobile,
affecter les données de véhicule des un ou plusieurs trajets effectués avec les un ou plusieurs véhicules à au moins un des deux, ou davantage, utilisateurs, où les données de véhicule d'un trajet sont affectées à au moins un des deux, ou davantage, utilisateurs sur la base d'une correspondance entre le trajet effectué avec les un ou plusieurs véhicules et un schéma de mobilité d'un des deux, ou davantage, utilisateurs,
affecter les données de dispositif mobile à au moins un des deux, ou davantage, utilisateurs sur la base de l'association entre les deux, ou davantage, dispositifs mobiles et les deux, ou davantage, utilisateurs, et
stocker les données de véhicule et les données de dispositif mobile dans le module de stockage sur la base de l'affectation des données de véhicule et des données de dispositif mobile à au moins un des deux,

ou davantage, utilisateurs.

| OBTAINING VEHICULAR DATA |
|---|

〜 110

| OBTAINING MOBILE DEVICE DATA |
|---|

〜 120

| IDENTIFYING ONE OR MORE TRIPS |
|---|

〜 130

| ASSIGNING VEHICULAR DATA TO AT LEAST ONE USER |
|---|

〜 140

| STORING THE VEHICULAR DATA<br>AND THE MOBILE DEVICE DATA |
|---|

〜 150

### Fig. 1a

| OBTAINING VEHICULAR DATA |
|---|

〜 110

| MERGING THE VEHICULAR DATA |
|---|

〜 115

| OBTAINING MOBILE DEVICE DATA |
|---|

〜 120

| DETERMINING AN ASSOCIATION BETWEEN<br>A USER AND A MOBILE DEVICE |
|---|

〜 125

| IDENTIFYING ONE OR MORE TRIPS |
|---|

〜 130

| ASSIGNING VEHICULAR DATA TO AT LEAST ONE USER |
|---|

〜 140

| DETECTING A CONFLICT |
|---|

〜 145

| STORING THE VEHICULAR DATA<br>AND THE MOBILE DEVICE DATA |
|---|

〜 150

| TRAINING A MACHINE-LEARNING MODEL |
|---|

〜 160

### Fig. 1b

VEHICULAR DATA
MOBILE DEVICE DATA → INTERFACE — 12

PROCESSING
MODULE — 16

STORAGE
MODULE — 14

— 10

## Fig. 1c

Fig. 2

## Holistic and Personal Data Platform and Services

350 ⬆ Data having user ID, vehicle ID, device ID, account ID,...

## ID Graph

Single stream ⬆ ⬇ Holistic data  ⬆ ⬇  340  ⬆ ⬇

| User Data Platform and Services 315 | Vehicle Data Platform and Services 325 | Data Collection Annotation Event 335 |

Phone stream, Telemetry-based, Size: big | ⬆ | Account ID User ID Vehicle ID

Vehicle stream, Telemetry-based Size: big | ⬆ | Vehicle ID Data

Annotation stream, Event-based, Size: small | ⬆ | Account ID User ID Vehicle ID

Phone
310

Vehicle
320

Pairing
330

Fig. 3

EP 3 796 683 B1

Fig. 4

**510** Mobile phone data stream
**512**

**520** Vehicle data stream
**522** VINVINVIN ....... VINVINVIN
**524**
**526**

Vehicle trip start

**530** Annotation data stream Or inference from behavior similarity

AID VIN UID .......... AID VIN UID

Data point

Segment point

Vehicle trip segment only.
Just pairing and ID alignment without telemetry data

Fig. 5a

EP 3 796 683 B1

Fig. 5b

522

526

514

510
Mobile phone data stream

AID AID :AID: AID                              AID :AID: AID  AID
UID UID :UID: UID                              UID :UID: UID  UID
        :VIN: VIN  <= VIN=Match( AID, UID; AID, UID) =>  VIN :VIN:

Data point

(AID, UID)=Match(VIN; VIN) =>  AIDAIDAID                      AIDAIDAID
                               UIDUIDUID ⎫528                 UIDUIDUID
520                            VINVINVIN ⎭      .......        VINVINVIN
Vehicle data stream

Vehicle trip start

530
Annotation data stream
Or inference from behavior similarity

AID                                          AID
VIN                                          VIN
UID                                          UID

Vehicle trip end

Vehicle trip segment only.
Just pairing and ID alignment without telemetry data

EP 3 796 683 B1

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160146615 A1
- EP 3451268 A1
- GB 2534273 A